# EUROPÄISCHE PATENTSCHRIFT

(11) **EP 4 151 341 B1**
(45) Veröffentlichungstag und Bekanntmachung des Hinweises auf die Patenterteilung: **05.03.2025**
(21) Anmeldenummer: 21197231.0
(22) Anmeldetag: 16.09.2021
(51) Int. Cl.: B22F 10/28, B22F 12/30, B22F 12/20, B22F 12/17, B22F 12/00, B22F 12/80, B22F 12/90, B29C 64/153, B29C 64/259, B33Y 10/00, B33Y 30/00, B22F 12/88, B29C 64/379, B33Y 40/00

(54) **ADDITIVES FERTIGUNGSSYSTEM**
ADDITIVE MANUFACTURING SYSTEM
SYSTÈME DE FABRICATION ADDITIVE

(43) Veröffentlichungstag der Anmeldung: 22.03.2023
(73) Patentinhaber: United Grinding Group Management AG, 3014 Bern (CH)
(72) Erfinder: CLOOTS, Michael, 9008 St. Gallen (CH); BRUNNER, Pascal, 9515 Hosenruck (CH); GUTKNECHT, Kai, 8808 Pfäffikon (CH); WIRTH, Florian, 9000 St. Gallen (CH); LAUBER, Philipp, 9322 Egnach (CH); FRAUCHIGER, Alex, 9000 St.Gallen (CH); KARANXHA, Stenli, 8599 Salmsach (CH)
(74) Vertreter: Maiwald GmbH

(56) Entgegenhaltungen:
- EP-A1- 3 632 592
- EP-A2- 2 926 927
- DE-A1- 102004 057 865
- DE-A1- 102006 014 835
- US-A1- 2011 168 091
- US-A1- 2018 133 800
- US-A1- 2018 133 966
- US-A1- 2019 054 686
- US-A1- 2020 254 526
- F... ET AL: "Sisma unveiled new PBF and DLP solutions", 26 November 2019 (2019-11-26), pages 1 - 7, XP055902617, Retrieved from the Internet <URL:https://www.3dnatives.com/en/sisma-pbf-dlp-solutions-261120195/#!> [retrieved on 20220317]

## Beschreibung

### Technisches Gebiet

Die vorliegende Erfindung betrifft ein additives Fertigungssystem und ein additives Fertigungsverfahren.

### Hintergrund der Erfindung

Additive Fertigung, insbesondere selektives Laserschmelzen (Selective Laser Melting (SLM) oder Laser Powder Bed Fusion (LPBF)) ist ein generatives Fertigungsverfahren, das zur Gruppe der Strahlschmelzverfahren gehört. Beim selektiven Laserschmelzen wird der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird so lange wiederholt, bis alle Schichten umgeschmolzen sind. Das fertige Bauteil wird vom überschüssigen Pulver gereinigt und nach Bedarf bearbeitet oder sofort verwendet.

Herkömmliche Maschinen für die additive Fertigung sind häufig einfach ausgeführt, daher mangelt es im Vergleich zum Präzisions-Werkzeugmaschinenbau an Robustheit und Genauigkeit. Außerdem erfordert solche Maschine eine zeitaufwendige Einrichtung und Vorbereitung. Beispielsweise benötigt ein Pulvermaterialwechsel in meisten Fällen eine sehr zeitaufwendige Reinigung aller pulververschmutzten Bauteile und Baugruppen, bevor die Maschine mit frischem Pulver befüllt werden kann.

Außerdem muss das Pulver manuell mit Schutzvorrichtungen wie Staubmaske oder Handschuhen aus einem Baubereich der Maschine entfernt werden. Während dieser Wartungsarbeiten ist das System nicht produktiv und kostenintensive Laser- und Optikeinheiten stehen aufgrund der manuellen Eingriffe und Arbeiten nicht zur Verfügung. Die Produktivität des konventionellen additiven Fertigungssystems ist somit begrenzt.

DE 10 2004 057865 A1 offenbart eine Vorrichtung zum Herstellen eines dreidimensionalen Objektes. Die Vorrichtung umfasst eine Tragevorrichtung zum Tragen des Objektes, die in einem Bauraum eines Behälters angeordnet ist. Die Tragevorrichtung weist einen höhenverstellbaren Träger mit einer dem Objekt zugewandten Oberseite auf. Die Vorrichtung umfasst weiterhin eine Aufbringvorrichtung zum Aufbringen von Schichten des Aufbaumaterials auf die Tragevorrichtung oder eine zuvor gebildete Schicht, eine Dosiereinrichtung zur Zuführung des Aufbaumaterials und eine Bestrahlungsvorrichtung.

EP 3 632 592 A1 offenbart ein additives Fertigungssystem mit einer drehbaren Fertigungseinheit. Das additive Fertigungssystem umfasst eine Pulvereinheitsöffnung, die an einer Stirnfläche oder an einer Seitenfläche des Basisabschnitts des Fertigungssystems angeordnet ist, um die Pulvereinheit ins additive Fertigungssystem einzuführen.

Das Dokument von Sisma unveiled new PBF and DLP solutions offenbart ein additives Fertigungssystem mit einem drehbaren Steuergerät. Das Fertigungssystem ist mit zwei sich vollständig überlappenden Laserquellen ausgestattet, die zusammenarbeiten, um Metallpulver zu verschmelzen, um Teile herzustellen.

### Zusammenfassung der Erfindung

Es ist daher eine Aufgabe der vorliegenden Erfindung, ein verbessertes additives Fertigungssystem bereitzustellen, das die Produktivität additiver Fertigung erhöht.

Diese Aufgabe wird durch das additive Fertigungssystem und das additive Fertigungsverfahren nach den unabhängigen Ansprüchen gelöst. Vorteilhafte Ausführungsformen und Weiterbildungen sind den Unteransprüchen und der nachfolgenden Beschreibung zu entnehmen.

Die vorliegende Erfindung umfasst ein additives Fertigungssystem, welches einen Bedienerbereich, einen Beladebereich und eine transportable Behältereinheit umfasst. Der Bedienerbereich ist zur Steuerung des Fertigungssystems gestaltet. Der Beladebereich ist zum Beladen des Fertigungssystems gestaltet. Der Bedienerbereich ist von einer ersten Seite des Fertigungssystems zugänglich und der Beladebereich ist von einer zweiten Seite des Fertigungssystems zugänglich, wobei sich der ersten Seite von der zweiten Seite unterscheidet. Die transportable Behältereinheit ist in den Beladebereich einfügbar. Die transportable Behältereinheit umfasst einen Pulvervorratsbehälter und einen Baubehälter. Der Pulvervorratsbehälter ist zum Bevorraten von Pulver gestaltet und der Baubehälter ist zum additiven Fertigen eines Werkstücks gestaltet.

Der Vorteil des erfindungsbemäßen additiven Fertigungssystems liegt darin, dass ein einwandfreier Ablauf der additiven Fertigung gewährleitet werden kann somit die Produktivität der additiven Fertigung erhöht werden kann. Durch Trennung des Bedienerbereichs und des Beladebereichs kann eine kontaminationsfreie additive Fertigung und eine vollständige Automatisierung der additiven Fertigung realisiert werden, ohne persönliche Schutzausrüstung zur Verfügung stellen zu müssen. Somit können auch Bedienersicherheit und Anlagensicherheit gewährleistet werden.

Das additive Fertigungssystem kann zur Herstellung des Werkstücks durch ein selektives Schmelzen (Selective Laser Melting (SLM) oder Laser Powder Bed Fusion (LPBF)) eines Pulvermaterials gestaltet sein. Das additive Fertigungssystem kann ein großmaßstäbliches System sein, das in mehreren Bereichen, wie z.B. Bedienerbereich, Beladebereich, Fertigungsbereich, Peripheriebereich etc. unterteilt ist. Die Bereiche können so eingerichtet sein, dass sie sich nicht überlappen. Mit anderen Worten, können die Bereiche innerhalb des additiven Fertigungssystems räumlich voneinander getrennt angeordnet sein, sodass ein Eingriff in den Bedienerbereich und ein Eingriff in den Beladebereich nicht einander durchkreuzen.

Am Bedienerbereich kann das additive Fertigungssystem gesteuert werden. Das heißt, dass erfindungsgemäß der Bedienerbereich zumindest eine Steuerungseinrichtung aufweist, sodass Betriebsbedingungen oder Betriebsparameter für die additive Fertigung eingestellt werden können. Ferner kann der Bedienerbereich einem Bediener einen Zugang ins Fertigungssystem ermöglichen.

Der Bediener ist ein automatisiertes System wie z.B. Roboterarm. Durch den Zugang können Instandhaltungsarbeiten, wie z.B. Reinigung, Reparatur, etc. durchgeführt werden.

Der Bedienerbereich kann an einer Vorderseite des Fertigungssystems angeordnet sein.

Der Beladebereich kann so eingerichtet sein, dass das Pulver durch den Beladebereich ins Fertigungssystem beladen und/oder aus diesem entladen werden kann. Das Pulver kann als Pulver an sich oder in einem Pulvervorratsbehälter be- und entladen werden. Der Beladebereich kann an einer unterschiedlichen Stelle im Fertigungssystem als der Bedienerbereich angeordnet sein. Der Beladebereich ist gegenüber relativ zu dem Bedienerbereich angeordnet. Somit kann der Beladebereich an einer Rückseite oder einer lateralen Seite des Fertigungssystems angeordnet sein.

Die Behältereinheit, die mindestens den Pulvervorratsbehälter und den Baubehälter umfasst, kann tragbar ausgebildet sein. Mit anderen Worten, kann die Behältereinheit von außen in den Beladebereich des Fertigungssystems eingeführt und/oder aus diesem nach außen entnommen werden. Der Pulvervorratsbehälter und der Baubehälter können miteinander verbunden und als eine Einheit zusammen in den Beladebereich beladen werden. Als Alternative können der Pulvervorratsbehälter und der Baubehälter separat ausgebildet sein, sodass sie unabhängig voneinander ins Fertigungssystem eingefügt und aus diesem entnommen werden können. Die Behältereinheit wird automatisiert transportiert und positioniert.

Der Baubehälter kann einen Pulverüberlauf umfassen, der gestaltet ist, um überschüssiges Pulver vom Beschichtungsvorgang aufzufangen.

Der Pulvervorratsbehälter kann gestaltet sein, frisch aufbereitetes Pulver aufzubewahren, das bei der additiven Fertigung in Richtung des Baubehälters schichtweise aufgetragen wird. Die additive Fertigung, mit anderen Worten selektives Schmelzen kann im Baubehälter stattfinden, indem das schichtweise aufgetragene Pulver durch einen Laserstrahl selektiv geschmolzen wird. Nach mehrmaligem Wiederholen des Auftragens des Pulvers und selektiven Schmelzens kann schließlich das Werkstück erzeugt werden.

Auf diese Weise wird eine räumliche und funktionale Trennung des Bedienerbereichs und des Beladebereichs realisiert, was zu einer kontaminationsfreieren oder kontaminationsfreien additiven Fertigung des Werkstücks führen kann. "Kontaminationsfreiheit" wird so verstanden, dass das Bedienpersonal nicht durch Pulver kontaminiert wird und/oder dass das Pulver nicht von der Umgebungsatmosphäre kontaminiert wird. Es können bedarfsweise Deckel verwendet werden, die zum Beispiel erst nach dem Eintrag der Behälter ins Fertigungssystem von den Behältern abgenommen werden.

In einer Ausführungsform, umfasst die Behältereinheit weiterhin einen Pulverüberlaufbehälter. Der Pulverüberlaufbehälter kann gestaltet sein, das Restpulver, das nach dem selektiven Schmelzen übriggeblieben ist, einzusammeln. Zusätzlich kann in den Pulverüberlaufbehälter Schweißspritzer, der während der additiven Fertigung entstanden ist, aufgefangen werden. Der Pulverüberlaufbehälter kann mit dem Pulvervorratsbehälter und/oder dem Baubehälter verbunden sein oder separat ausgebildet sein. Der Pulverüberlaufbehälter kann wie der Pulvervorratsbehälter und der Baubehälter transportable gestaltet sein.

Das frische Pulver kann beispielsweise von einer Oberfläche des Pulvervorratsbehälters mittels einer Rakel schichtweise auf eine Oberfläche des Baubehälters aufgetragen werden. Nach dem selektiven Schmelzen des aufgetragenen Pulvers kann das überschüssige Pulver mittels der Rakel in den Pulverüberlaufbehälter geschoben werden. Mit anderen Worten, können der Pulvervorratsbehälter, der Baubehälter und der Pulverüberlaufbehälter in dieser Reihenfolge in der Behältereinheit angeordnet sein, um einen Pulvertransport mittels der Rakel in einer Richtung zu ermöglichen.

In einer Ausführungsform, umfassen der Pulvervorratsbehälter und der Baubehälter jeweils eine Grundplatte und eine Hebestange. Die Hebestange ist zum Anheben der Grundplatte innerhalb des jeweilige Behälters gestaltet. Die Grundplatte des Pulvervorratsbehälters und des Baubehälters kann jeweils dazu gestaltet sein, einen Innenraum des jeweiligen Behälters nach außen abzudichten.

Jede Grundplatte kann mit einer Hebestange verbunden sein, um die Grundplatte innerhalb des jeweiligen Behälters in vertikaler Richtung zu bewegen. Vorzugsweise kann die Hebestange des Pulvervorratsbehälters die Grundplatte nach oben anheben, sodass das frisch aufbereitetes Pulver lückenlos auf der Oberfläche des Pulvervorratsbehälters bereitgestellt werden kann. Währenddessen kann die Grundplatte des Baubehälters nach jedem Schmelzvorgang oder jeder Belichtung des Laserstrahls mittels der Hebestange schrittweise nach unten herabgesetzt werden, um den nachfolgenden Schmelzvorgang des erneut aufgetragenen Pulvers zu ermöglichen.

In einer Ausführungsform kann der Pulverüberlaufbehälter auch eine Grundplatte und eine Hebestange aufweisen, um das Ausleeren des Pulverüberlaufbehälters, in dem das Restpulver und/oder der Schweißspritzer gesammelt sind, zu erleichtern.

Erfindungsgemäß weist der Baubehälter eine Bauplatte auf. In einer Ausführungsform weist der Baubehälter ferner eine Heizplatte auf. Die Heizplatte ist zwischen der Bauplatte und der Grundplatte angeordnet, wobei die Heizplatte zum Erhitzen der Bauplatte gestaltet ist. Die Bauplatte kann dazu dienen, das schichtweise aufgetragene Frischpulver aufzunehmen und das selektive Schmelzen des Pulvers dort zu ermöglichen. Durch das Erhitzen der Bauplatte kann eine Spannung am erzeugten Werkstück verringert werden, indem ein Temperaturgradient zwischen den erzeugten Materialschichten des Werkstücks verringert wird.

In einer Ausführungsform kann die Bauplatte auf der Heizplatte mittels eines Dreipunktauflagesystems angeordnet sein. Beispielsweise kann auf einer Unterseite der Bauplatte, die der Heizplatte zugewandt ist, drei Bolzenelemente angeordnet sein, die auf die Heizplatte aufliegen können. Die Bolzenelemente können von der Unterseite der Bauplatte in Richtung der Heizplatte vorstehen und untereinander jeweils einen möglichst großen Abstand haben. Auf diese Weise kann eine losgelagerte jedoch sichere Dreipunktauflage der Bauplatte realisiert werden. Zusätzlich kann die Unterseite der Bauplatte zumindest einen Spannstift aufweisen, durch den beispielsweise die Bauplatte während einer Nachbehandlung der Bauplatte an der Heizplatte fixiert werden kann.

In einer Ausführungsform können in jeweiliger Ecke der Heizplatte ein Durchgangsloch vorgesehen sein. Durch das Durchgangsloch kann ein Befestigungsbolzen, der vom Boden des Baubehälters kontaktlos durch die Heizplatte bis in die Bauplatte reicht, eingeführt werden. Dieser Befestigungsbolzen kann dazu dienen, die Bauplatte an einer niedrigsten Stellung innerhalb des Baubehälters zu spannen oder arretieren.

Zusätzlich kann sich an einer Unterseite der Heizplatte ein Bolzenelement für ein Null-Punkt-Spannsystem befinden, um eine feste und präzise Verbindung der Heizplatte mit der Grundplatte zu ermöglichen. Um das Bolzenelement der Heizplatte kraftschlüssig und formschlüssig aufnehmen zu können, kann die Grundplatte ein Spannelement umfassen. Das Bolzenelement kann vorzugsweise in einer Mitte der Heizplatte angeordnet sein und das Spannelement kann vorzugsweise in einer Mitte einer Oberseite der Grundplatte, die der Heizplatte zugewandt ist, angeordnet sein.

In einer Ausführungsform, umfasst die Heizplatte Heizelemente und eine isolierende Schicht. Die isolierende Schicht ist zur Isolierung in Richtung der Grundplatte unterhalb der Heizelement angeordnet. Die Heizplatte kann beispielsweise keramische Heizelemente umfassen. Mittels der Heizplatte kann die Bauplatte auf mehrere Hundert °C aufgeheizt werden. Insbesondere kann die Bauplatte auf 250 °C oder sogar auf 500 - 600 °C erhitzt werden. Unterhalb den Heizelementen, aber innerhalb der Heizplatte kann eine isolierende Schicht vorgesehen sein, damit die Heizwärme ausnahmslos nur an die Bauplatte geleitet werden kann. Mit anderen Worten kann eine Leitung der Heizwärme in Richtung der Grundplatte durch die isolierende Schicht verhindert werden. Auf diese Weise können eine Effizienz und eine Qualität der additiven Fertigung erhöht werden. In einer Ausführungsform, umfasst die Grundplatte mindestens eine Kühlleitung, die durch die Hebestange mit einem Zulauf und einem Ablauf eines Kühlmediums gekoppelt ist. Im Inneren der Grundplatte oder an einer Unterseite der Grundplatte kann sich die Kühlleitung befinden, innerhalb derer ein Kühlmedium geführt wird. An der Hebestange können ein Zulaufanschluss und ein Ablaufanschluss des Kühlmediums integriert sein, die mit der Kühlleitung gekoppelt sind. Auf diese Weise kann ein einwandfreier Umlauf des Kühlmediums, folglich eine effiziente Kühlung der Grundplatte ermöglicht werden. Folglich kann unterhalb der Heizplatte entstehende Wärme blockiert werden und damit einhergehende thermische Dehnung des Baubehälters, insbesondere in vertikaler Richtung kann verhindert werden.

Erfindungsgemäß umfasst der Baubehälter mindestens ein Fixierungselement mit einem federvorgespannten Bolzen und einer Spannkugel. Während einem Behälteraustausch ist die Spannkugel durch den federvorgespannten Bolzen an der Bauplatte klemmbar. Das Fixierungselement kann vorzugweise am Boden des Baubehälters angeordnet sein, um die Grundplatte, die Heizplatte und/oder die Bauplatte bei dem Behälteraustausch und/oder einer Aufbereitung des Baubehälters dort festzuhalten. Der Baubehälter kann vorzugsweise zwei oder mehre Fixierungselemente aufweisen, um eine zuverlässige Verbindung zwischen dem Behälterboden und der Grundplatte, der Heizplatte und/oder der Bauplatte bereitzustellen.

Das Fixierungselement kann mindestens eine, vorzugsweise ein Paar Spannkugeln und einen Bolzen umfassen, der mit einer Feder in Richtung des Innenraums des Behälters verbunden ist. Das Fixierungselement kann weiterhin ein Gehäuse umfassen, das den federvorgespannten Bolzen und die Spannkugel aufnimmt. Das Gehäuse des Fixierungselements kann am Behältergehäuse integriert sein. Der federvorgespannte Bolzen kann sich innerhalb des Gehäuses in vertikaler Richtung bewegen, wobei die Bewegung des Bolzens durch die Feder und die Spannkugel, die an einer lateralen Innenseite des Gehäuses angeordnet ist, eingeschränkt werden kann. Mit anderen Worten, kann die Spannkugel den federvorgespannten Bolzen an der Bauplatte einklemmen, sodass der federvorgespannte Bolzen in einer eingezogenen Position die Bauplatte festhalten kann. In einer Rückstellposition des Bolzens kann die Bauplatte losgelagert werden.

Wenn der Baubehälter aus dem additiven Fertigungssystem entfernt wird, können sich die Grundplatte, die Heizplatte und/oder die Bauplatte beim Transportieren, Nacharbeiten und/oder Auffrischen des Behälters bewegen, was zu einer Ablöse der Bauplatte von der Grundplatte führen kann. Um die Verlagerung und/oder Ablöse der einen oder anderen Platte zu vermeiden, kann der Bolzen mit der Feder in die Fixierungsposition durch das Durchgangsloch der Heizplatte in die Bauplatte gedrückt werden. Dabei kann der Bolzen gleichzeitig die Spannkugel nach außen drücken. Folglich kann eine form- und kraftschlüssige Verbindung zwischen der Bauplatte und dem Behältergehäuse, insbesondere dem Behälterboden des Baubehälters hergestellt werden. Da sich die Heizplatte zwischen der Bauplatte und der Grundplatte befindet, kann die Heizplatte automatisch mit eingespannt werden.

Während der additiven Fertigung kann sich das Fixierungselement in einer Rückstellposition befinden, sodass der Bolzen nicht mit der Bauplatte in Eingriff steht. Auf diese Weise könnten die Bauplatte, Heizplatte und/oder Grundplatte innerhalb des Baubehälters durch die Hebestange erhöht und/oder abgesenkt werden.

Erfindungsgemäß umfasst das additive Fertigungssystem ferner eine Baukammer. In einer Ausführungsform umfasst das additive Fertigungssystem ferner eine Hubeinrichtung. Die Baukammer ist zum Auftragen des Pulvers auf die Bauplatte mit der Behältereinheit koppelbar und die Hubeinrichtung ist zum Anheben der transportablen Behältereinheit an einen Boden der Baukammer gestaltet.

Die Baukammer kann zur Durchführung des selektiven Schmelzens des Pulvers ausgelegt sein. Die Hubeinrichtung kann dazu ausgelegt sein, die Behältereinheit, die von außen ins Fertigungssystem eingeführt ist, am Boden der Baukammer anzudocken. Insbesondere kann die Bauplatte des Baubehälters durch das Anheben der Behältereinheit mittels der Hubeinrichtung und zusätzlich durch das Anheben der Bauplatte mittels der Hebestange mit dem Boden der Baukammer gekoppelt werden.

In der Baukammer kann sich eine Rakel befinden, die das frische Pulver von dem Pulvervorratsbehälter auf die Bauplatte des Baubehälters schichtweise aufträgt und das überschüssige Restpulver von der Bauplatte zum Pulverüberlaufbehälter transportiert. Ferner kann die Baukammer eine Öffnung umfassen, die beispielsweise durch ein optisch transparent Material abgedichtet ist. Durch diese Öffnung kann der Laserstrahl bereitgestellt werden, um eine frische Pulverschicht, die auf die Bauplatte aufgetragen ist, zu belichten.

In einer Ausführungsform, weist der Boden der Baukammer eine Dichtungsschnittstelle auf, die zur formschlüssigen und gasdichten Verbindung der Behältereinheit mit der Baukammer gestaltet ist. Zwischen dem Boden der Baukammer und der Behältereinheit, die durch die Hubeinrichtung zum Boden der Baukammer angehoben wird, kann die Dichtungsschnittstelle angeordnet sein. Die Dichtungsschnittstelle kann eine umlaufende Dichtung umfassen, welche einen oberen Rand der Behältereinheit umgeben, um eine vakuumfeste Verbindung zwischen der Behältereinheit und der Baukammer herzustellen. Am oberen Rand der Behältereinheit können Öffnungen des Pulvervorratsbehälters, des Baubehälters und/oder des Pulverüberlaufbehälters angeordnet sein.

In einer Ausführungsform, weist die Dichtungsschnittstelle einen Spalt zum Sammeln eines Pulverrestes auf. Der Spalt ist mit einer Reinigungsdüse zum Ausblasen des Pulverrests gekoppelt. Der Spalt kann zwischen der Behältereinheit und der Dichtungsschnittstelle angeordnet sein und zumindest teileweise entlang der Umfangsrichtung des oberen Randes der Behältereinheit erstrecken. Der Spalt kann insbesondere zwischen der Dichtungsschnittstelle und der Öffnung des Pulverüberlaufbehälters vorgesehen sein.

Der Spalt kann sich ferner zumindest teilweise vom Boden der Baukammer in Richtung des Behälterbodens erstrecken, sodass ein Ende des Spaltes in der Baukammer freiliegt. Ferner kann ein anderes Ende des Spalts mit der Reinigungsdüse verbunden sein, durch die beispielsweis Luft oder Inertgas ausgeblasen wird. Mit anderen Worten, kann zwischen der Dichtungsschnittstelle und der Behältereinheit die Reinigungsdüse angeordnet sein, die mit dem Spalt gekoppelt ist. Während der additiven Fertigung kann das überschüssige Pulver im Spalt eingesammelt sein und es kann nach Abschluss der additiven Fertigung durch das Gas aus dem Spalt herausgetrieben werden, um eine Pulververschleppung bei einer Behälterentnahme zu vermeiden.

In einer Ausführungsform kann ein Temperierungsmittel in der Dichtungsschnittstelle integriert sein. Das Temperierungsmittel kann dazu eingerichtet sein, um unerwünschte Materialausdehnungen im Bereich der Dichtungsschnittstelle sowohl am Baubehälter als auch am Boden der Baukammer zu vermeiden.

In einer Ausführungsform, umfasst das additive Fertigungssystem ferner einen Schutzgaseinlass und einen Schutzgasauslass. Der Schutzgaseinlass und der Schutzgasauslass sind zur Erzeugung eines Schutzgasstroms relativ zu der Bauplatte angeordnet. Der Schutzgaseinlass und/oder der Schutzgasauslass können so gestaltet sein, dass der Schutzgasstrom nur wenige Millimeter oberhalb der Bauplatte, i.e. Prozessebene austritt. Der Schutzgaseinlass und/oder der Schutzgasauslass können vorzugsweise senkrecht zur Bewegungsrichtung der Rakel angeordnet sein. Als Alternative können der Schutzgaseinlass und/oder der Schutzgasauslass parallel zur Bewegungsrichtung der Rakel angeordnet sein.

Der Schutzgaseinlass kann zur Einspeisung des Schutzgases in die Baukammer eingerichtet sein und durch den Schutzgasauslass kann das in der Baukammer freigesetzte Schutzgas eingesaugt werden. Durch eine kontinuierliche Zu- und Abfuhr des Schutzgases kann ein laminarer und homogener Schutzgasstrom in der Baukammer erzeugt werden. Dabei kann die Rakel, die parallel zur Flussrichtung des Schutzgasstroms angeordnet ist, eine partielle Umleitung und/oder Verwirbelung des Schutzgasstroms vermeiden.

In einer Ausführungsform, kann der Schutzgaseinlass ein poröses Element zum Bereitstellen eines homogenen Schutzgasstroms umfassen. Das poröse Element kann dazu gestaltet sein, einen Staudruck im Schutzgaseinlass zu erzeugen. Das poröse Element kann als ein Filterelement verstanden werden, das am Schutzgaseinlass angeordnet ist und sich über gesamte Breite und Höhe des Schutzgaseinlasses erstreckt. Das poröse Element kann eine gleichmäßige Porosität über gesamte Fläche des porösen Elements aufweisen. Bei dem porösen Element kann es sich um ein gesintertes Element oder auch schaumstoffartiges, aber gasdurchlässiges Element handeln. Somit kann ein konstanter Staudruck im Schutzgaseinlass erzeugt werden und der Schutzgasstrom kann im Bereich des Schutzgaseinlasses keine Geschwindigkeitsgradienten aufweisen. Auf diese Weise kann eine homogene Zufuhr des Schutzgases in die Baukammer realisiert werden.

Ferner kann der Schutzgasauslass so ausgebildet sein, dass er das in die Baukammer eingelassene Schutzgas vollständig aufnimmt und keine Verjüngung des laminaren und homogenen Schutzgasstroms verursacht.

In einer Ausführungsform kann das additive Fertigungssystem eine Schutzgaseintrittsöffnung aufweisen, die sich oberhalb der Bauplatte befindet. Durch die Schutzgaseintrittsöffnung kann das Schutzgas zusätzlich oberhalb der Bauplatte in die Baukammer zugeführt werden. Die Schutzgaseintrittsöffnung kann an einer gleichen Seite der Schutzgaseinlass, d.h. an einer gegenüberliegenden Seite des Schutzgasauslasses angeordnet sein. Somit kann das Schutzgas, das aus der Schutzgaseintrittsöffnung austritt, ebenfalls durch den Schutzgasauslass abgeführt werden.

Zwischen der Schutzgaseintrittsöffnung und der Baukammer kann eine gradierte poröse Struktur angeordnet sein. Die gradierte poröse Struktur kann ebenfalls gegenüber dem Schutzgasauslass angeordnet sein. Der Begriff "gradierte poröse Struktur" kann so verstanden werden, dass in der porösen Struktur eine Gradierung der Porosität vorliegt. Durch den Einsatz der porösen Struktur kann ein leichter statischer Überdruck zwischen der Schutzgaseintrittsöffnung und der porösen Struktur erzeugt werden, wodurch das Schutzgas homogen durch die poröse Struktur strömen kann. Ferner kann die gradierte poröse Struktur dazu dienen, eine Geschwindigkeit des Schutzgasstroms zu regulieren. Beispielsweise kann ein schneller Gasstrom unmittelbar an einem Laseraustrittsfenster erzeugt werden, was zu einer Verhinderung der Ablagerungen von Schmauch oder Schweißspritzern am Laseraustrittsfenster beiträgt.

Dieser von oben kommende Schutzgasstrom kann den laminaren Charakter des baufeldnahen Schutzgasstroms unterstützen, der von dem Schutzgaseinlass zum Schutzgasauslass strömt. Auf diese Weise können innerhalb der Baukammer größere Wirbel, in denen sich Schmauch sammeln könnte, welcher zugleich durch sein hohes Absorptionsvermögen den Laserstrahl nachteilig beeinflussen kann, durch den von oben kommenden Schutzgasstrom weitgehend vermieden werden.

In einer Ausführungsform, umfasst das additive Fertigungssystem ferner eine optische Bank. Die optische Bank umfasst eine off-axis Überwachungseinrichtung und eine on-axis Überwachungseinrichtung. Die off-axis Überwachungseinrichtung ist zur Überwachung einer Wärmeverteilung einer additiv gefertigten Bauteilschicht des Werkstücks und einer Auftragsqualität einer zuletzt aufgetragenen Pulverschicht gestaltet. Die on-axis Überwachungseinrichtung ist zur Ermittlung einer Temperatur eines Pulverbades auf der aktuell gefertigten Bauteilschicht gestaltet.

Die off-axis Überwachungseinrichtung kann in der Baukammer eine, mindestens eine oder zwei hochauflösende Multifunktionskameras mit hoher spektraler Bandbreite umfassen, die während der additiven Fertigung unter Verwendung optischer Bandpassfilter thermische Prozessemissionen erfassen können. Eine Datenerfassung der Kamerabilder kann so ausgelegt sein, dass sie während der Belichtung einer Pulverschicht auftretende und erfasste Emissionsdaten innerhalb eines Bildes integriert. Das Resultat dieser Aufnahme kann einer Heat-Map der aktuell aufgebauten Schicht entsprechen. Aus dieser Heat-Map kann eine Möglichkeit bestehen, thermische Unregelmäßigkeiten während der additiven Fertigung zu erfassen und bei ausreichend schneller Verarbeitung dieser Informationen bereits gegensteuernde Maßnahmen während einer darauffolgenden Schicht zu ergreifen. Dies kann beispielsweise eine dynamische Anpassung von Belichtungsreihenfolgen zu scannender Bereiche innerhalb einer Schicht, Laserleistungen oder einer Scangeschwindigkeit innerhalb bestimmter Scanbereiche sein.

Mit Hilfe der off-axis-Kameras kann auch die Möglichkeit zur Erfassung von Pulverauftragsfehlern bestehen, die während eines Beschichtungsvorgangs auftreten können. Beim Pulverauftrag kann in Richtung der Rakelfahrt linienartige Strukturen entstehen. Eine Sichtbarkeit solcher Pulverauftragsfehler kann sich am stärksten erhöhen, wenn sie durch eine seitliche Beleuchtung zur Erzeugung eines Schattens angestrahlt werden. Der Pulverauftragsfehler und/oder der Beschichtungsfehler kann sich dann indirekt über einen charakteristischen Schatten mit Hilfe der off-axis-Kamera erfassen lassen.

Darüber hinaus kann die off-axis Überwachungseinrichtung zur Scannerkalibration eingerichtet sein. Die Scannerkalibration kann vor einem Start der additiven Fertigung mit einer sauberen und pulverfreien Bauplatte ausgeführt werden.

Die on-axis Überwachungseinrichtung kann einen Quotientenpyrometer, Photodioden und/oder eine Hochgeschwindigkeitskamera umfassen, die zur Ermittlung der Temperatur des Pulverbades gestaltet ist. Auf der Bauplatte innerhalb des Baubehälters kann sich das Pulverbad befinden, welches durch das selektive Schmelzen erzeugte Werkstück umgibt.

Der Quotientenpyrometer kann dazu ausgelegt sein, die Maximaltemperaturen im Pulverbad zu erfassen. Mit Hilfe der Hochgeschwindigkeitskamera kann eine Pulverbadform und eine Verteilung einer Wärmestrahlungsintensität im Pulverbad erfasst werden, was zu einem verbesserten Gesamtverständnis des Prozesses beitragen kann. Mit den Photodioden kann auch die Wärmestrahlung im Schmelzbad bzw. Pulverbad erfasst werden.

Auf diese Weise kann eine präzise Erfassung der thermischen Prozessemissionen in der Baukammer realisiert werden, wodurch eine Voraussetzung für eine Echtzeitregelung der additiven Fertigung erfüllt werden kann.

In einer Ausführungsform, umfassen der Pulvervorratsbehälter und der Baubehälter jeweils einen Deckel. Der Deckel weist einen Vorsprung zum Greifen des Deckels auf. Um einen kontaminationsfreien Transport der Behältereinheit, insbesondere des Pulvervorratsbehälters und des Baubehälters zu ermöglichen, kann jeder Behälter einen Deckel aufweisen. Der Deckel kann eingerichtet sein, den jeweiligen Behälter von außen hermetisch abzudichten. Zusätzlich kann der Pulverüberlaufbehälter auch einen Deckel aufweisen. Am jeden Deckel kann ein Vorsprung ausgebildet sein, der manuell oder mittels eines Roboterarms ergriffen werden kann, um den Deckel von dem jeweiligen Behälter zu entfernen und/oder den jeweiligen Behälter mit dem Deckel zu schließen.

Erfindungsgemäß liegt die erste Seite des Fertigungssystems der zweiten Seite des Fertigungssystems gegenüber. Somit kann der Bedienerbereich relative zu der Baukammer gegenüber dem Beladebereich angeordnet werden. Mit anderen Worten kann der Bedienerbereich an der Vorderseite des Fertigungssystems eingerichtet werden, während der Beladebereich an der Rückseite des Fertigungssystems eingerichtet werden kann und umgekehrt. Auf diesen Weise können der Bedienerbereich und der Beladebereich nicht einander durchkreuzt werden und einen kontaminationsfreien Zugang ins additive Fertigungssystem gewährleistet werden.

In einer Ausführungsform, weist der Bedienerbereich einen Monitor zur Kontrolle und/oder Steuerung von Daten und/oder Funktionen des Fertigungssystems auf. Vorzugsweise kann an einer Außenseite des Bedienerbereichs eine Benutzerschnittstelle angeordnet sein, um eine Steuerung sowie einen Betrieb des additiven Fertigungssystems zu ermöglichen. Der Monitor kann als ein Touchscreen ausgebildet sein
Der Monitor kann einen Ablauf der additiven Fertigung, eines Betriebsparameters, eines Zustandes des additiven Fertigungssystems und/oder alle erforderlichen Maschinenfunktionen und -daten zeigen, damit der Bediener beispielsweise den Prozess der additiven Fertigung überwachen und entsprechend der angezeigten Information das additive Fertigungssystem steuern und/oder warten kann.

Bedarfsweise kann auch verschiedene Prozessgrößen über den Monitor parametrisiert werden. Der Monitor kann daher mit einer Steuereinrichtung und/oder diversen Erfassungseinrichtungen elektronisch verbunden sein, um die Kontrolle und/oder Steuerung des Fertigungssystems zu ermöglichen.

Erfindungsgemäß weist der Bedienerbereich einen öffnenbaren Zugang zur Baukammer auf. Der öffnenbare Zugang kann eine Tür oder ein Fenster sein, wodurch der Bediener in die Baukammer gelangen kann, beispielsweise um Wartungsarbeiten durchzuführen. Der Zugang kann eine seitlich verschiebbare Tür aufweisen oder eine mit einem transparenten Material abgedichtete Öffnung sein. An der öffnenbaren Zugang kann der Monitor integriert sein.

Erfindungsgemäß umfasst der Beladebereich eine Schnittstelle zum automatisierten Einfügen der transportablen Behältereinheit. In einer Ausführungsform, die nicht Teil der Erfindung ist, umfasst der Beladebereich eine Schnittstelle zum manuellen Einfügen der transportablen Behältereinheit. Der Beladebereich kann wie der Bedienerbereich eine Tür oder eine Öffnung umfassen, wodurch die transportable Behältereinheit manuell oder automatisiert ins Fertigungssystem eingeführt und aus diesem entfernt werden kann. Insbesondere kann der Transport der Behältereinheit mittels eines Roboterarms oder ähnliches erfolgen, um mögliche Kontamination durch Menschen zu vermeiden.

Die vorliegende Erfindung umfasst ferner ein additives Herstellungsverfahren, wie es im beigefügten unabhängigen Anspruch definiert ist.

Durch Trennung des Bedienerbereichs und des Beladebereichs kann eine kontaminationsfreie additive Fertigung und eine vollständige Automatisierung der additiven Fertigung realisiert werden, ohne persönliche Schutzausrüstung zur Verfügung stellen zu müssen. Somit können auch Bedienersicherheit und Anlagensicherheit gewährleistet werden.

In einer Ausführungsform, umfasst das additive Fertigungsverfahren weiterhin ein Anheben der transportablen Behältereinheit mittels einer Hubeinrichtung an einem Boden einer Baukammer nach dem Einfügen der transportablen Behältereinheit in den Beladebereich. Mit dem Einfügen der Behältereinheit ins Fertigungssystem kann der Ablauf der additiven Fertigung vollständig automatisiert werden. Die Hubeinrichtung kann entweder Einzelbehälter oder die gesamte Behältereinheit in vertikaler Richtung bewegen. Somit kann die Behältereinheit mittels der Hubeinrichtung am Boden der Baukammer angedockt werden, um frisch aufbereitetes Pulver, eine Bauplatte und/oder einen Pulverüberlaufbehälter in die Baukammer zu positionieren.

In einer Ausführungsform, umfasst das additive Fertigungsverfahren weiterhin ein erstes Einlassen eines Schutzgases in die Baukammer zur Inertisierung der Baukammer nach dem Anheben der transportablen Behältereinheit. Die Inertisierung kann so verstanden werden, dass durch eine Evakuierungseinrichtung unerwünschtes Gas wie z.B. Sauerstoff aus der Baukammer entfernt wird und anschließend ein Inertgas wie z.B. Argon, Stickstoff, etc. bereitgestellt wird, um einen möglichst geringen Sauerstoffgehalt zu ermöglichen. Auf diese Weise kann eine Herstellung eines qualitativ hochwertigen Produktes gewährleistet werden.

Wenn der Pulvervorratsbehälter, der Baubehälter und der Pulverüberlaufbehälter auf eine Prozessposition für die additive Fertigung ausgerichtet sind, kann ein Schutzgas in die Baukammer eingespeist werden. Die initiale Inertisierung der Baukammer kann jedoch erfolgen, ohne den Deckel des jeweiligen Behälters der Behältereinheit zu entfernen. Das Schutzgas, d.h. Inertgas kann einen sehr geringen Anteil oder gar keinen Anteil von Sauerstoff aufweisen.

In einer Ausführungsform, umfasst das additive Fertigungsverfahren weiterhin ein Entfernen eines Deckels jeweils vom Pulvervorratsbehälter und vom Baubehälter nach dem ersten Einlassen eines Schutzgases. Der Deckel des jeweiligen Behälters kann ebenfalls automatisch entfernt werden. Um dies zu ermöglichen, kann beispielsweise ein Greifarm oder Roboterarm mit einem Vorsprung in Eingriff stehen, der an einer Außenseite des Deckels geformt ist. Der Greifarm kann den Deckel zu einer Deckellagerposition bringen. Der Deckel des Pulvervorratsbehälters, der Deckel des Baubehälters und/oder der Deckel des Pulverüberlaufbehälters können gleichzeitig oder nacheinander entfernt werden und nach der additiven Fertigung an den jeweiligen Behälter zurückgebracht werden.

In einer Ausführungsform, umfasst das additive Fertigungsverfahren weiterhin ein Vakuumieren der Baukammer und anschließend ein zweites Einlassen eines Schutzgases in die Baukammer zur Inertisierung der geöffneten Behälter nach dem Entfernen des Deckels. Nach der Öffnung des jeweiligen Deckels der Behältereinheit kann ein Innenraum des jeweiligen Behälters in der Baukammer freigelegt werden. Durch die zweite Inertisierung der Baukammer kann insbesondere das im Pulvervorratsbehälter enthaltene frische Pulver auch mit inertisiert werden, um das frische Pulver vor Oxidation zu schützen.

Weitere Merkmale, Vorteile und Anwendungsmöglichkeiten der vorliegenden Erfindung ergeben sich aus der nachfolgenden Beschreibung, den Ausführungsbeispielen und den Figuren. Alle beschriebenen und/oder bildlich dargestellten Merkmale können unabhängig von ihrer Darstellung in einzelnen Ansprüchen, Figuren, Sätzen oder Absätzen miteinander kombiniert werden. In den Figuren stehen gleiche Bezugszeichen für gleiche oder ähnliche Objekte.

### Kurze Beschreibung der Figuren

- Figur 1: zeigt ein additives Fertigungssystem gemäß einer Ausführungsform der vorliegenden Erfindung.
- Figur 2a, 2b: zeigen einen Bedienerbereich eines additiven Fertigungssystems gemäß einer Ausführungsform der vorliegenden Erfindung
- Figur 3: zeigt einen Beladebereich eines additiven Fertigungssystems gemäß einer Ausführungsform der vorliegenden Erfindung.
- Figur 4a, 4b: zeigen eine Draufsicht eines additiven Fertigungssystems gemäß einer Ausführungsform der vorliegenden Erfindung.
- Figur 5a, 5b: zeigen ein additives Fertigungssystem gemäß einer Ausführungsform der vorliegenden Erfindung
- Figur 6: zeigt eine Behältereinheit und eine Baukammer eines additiven Fertigungssystems gemäß einer Ausführungsform der vorliegenden Erfindung.
- Figur 7: zeigt eine Behältereinheit eines additiven Fertigungssystems gemäß einer Ausführungsform der vorliegenden Erfindung.
- Figur 8a, 8b: zeigen einen Baubehälter eines additiven Fertigungssystems gemäß einer Ausführungsform der vorliegenden Erfindung.
- Figur 9a, 9b: zeigen ein Fixierungselement eines additiven Fertigungssystems gemäß einer Ausführungsform der vorliegenden Erfindung.
- Figur 10: zeigt einen Pulvervorratsbehälter eines additiven Fertigungssystems gemäß einer Ausführungsform der vorliegenden Erfindung.
- Figur 11: zeigt ein additives Fertigungssystem gemäß einer Ausführungsform der vorliegenden Erfindung.
- Figur 12a, 12b: zeigen eine Baukammer eines additiven Fertigungssystems gemäß einer Ausführungsform der vorliegenden Erfindung.
- Figur 13: zeigt schematisch einen Schutzgasstrom in einer Baukammer gemäß einer Ausführungsform der vorliegenden Erfindung.
- Figur 14: zeigt ein additives Fertigungssystem gemäß einer Ausführungsform der vorliegenden Erfindung.
- Figur 15a, 15b: zeigen eine optische Bank eines additiven Fertigungssystems gemäß einer Ausführungsform der vorliegenden Erfindung.

### Detaillierte Beschreibung der Ausführungsbeispiele

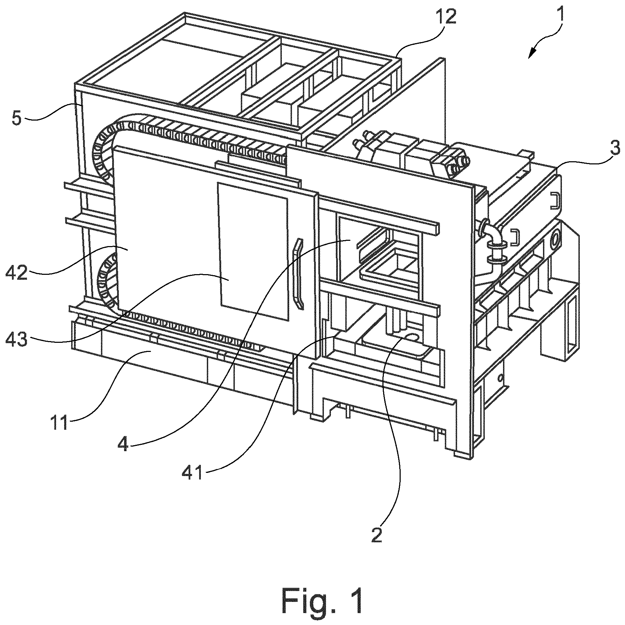

Figur 1 zeigt ein erfindungsgemäßes additives Fertigungssystem 1. Das additive Fertigungssystem 1 kann gestaltet sein, ein Werkstück durch ein selektives Schmelzen (Selective Laser Melting, SLM) eines schichtweise aufgetragenen Pulvermaterials herzustellen.

Das additive Fertigungssystem 1 umfasst einen Bedienerbereich 2, einen Beladebereich 3 und eine Baukammer 4. Der Bedienerbereich 2 ist von einer ersten Seite 11, d.h. einer Vorderseite 11 des additiven Fertigungssystems 1 zugänglich und zur Steuerung des Fertigungssystems 1 gestaltet. Der Beladebereich 3 ist gegenüber dem Bedienerbereich 2, d.s. an der Rückseite 12 des additiven Fertigungssystems 1 angeordnet und zum Beladen des Fertigungssystems 1 gestaltet. In der Baukammer 4 findet das selektive Schmelzen des schichtweise aufgetragenen Pulvers statt. Das additive Fertigungssystem 1 umfasst ferner einen Peripheriebereich 5, in dem Peripherietechnologien wie z.B. eine Schutzgaskühlung, eine Gasumwälzpumpe, eine Vakuumpumpe, einen Rußpartikelfilter, ein Kühlsystem und/oder ein Laser untergebracht sind. Die Peripherietechnologien sind im Peripheriebereich 5 verschiebbar gelagert.

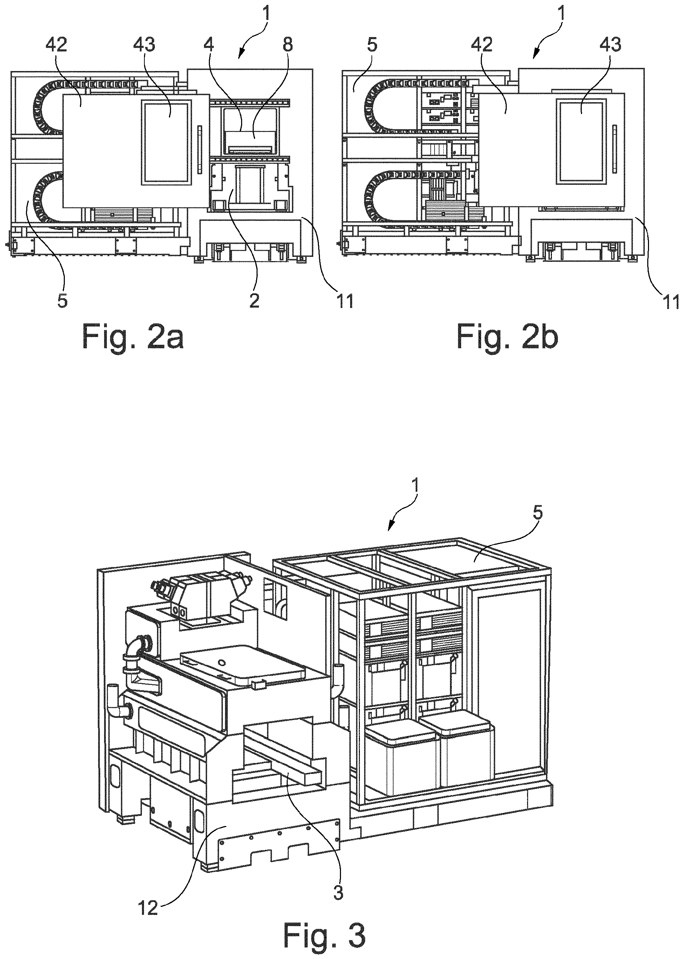

Wie in Figuren 2a und 2b gezeigt, weist der Bedienerbereich 2 einen öffnenbaren Zugang 41 zur Baukammer 4 auf. Der Zugang 41 weist eine seitlich verschiebbare Tür 42 auf. An der verschiebbaren Tür 42 ist ein Monitor 43 integriert, der zur Kontrolle und/oder Steuerung von Daten und/oder Funktionen des Fertigungssystems 1 gestaltet ist. Der Monitor 43 kann einen Ablauf der additiven Fertigung, eines Betriebsparameters, eines Zustandes des additiven Fertigungssystems 1 und/oder alle erforderlichen Maschinenfunktionen und -daten zeigen, damit der Bediener beispielsweise den Prozess der additiven Fertigung überwachen und entsprechend der angezeigten Information das additive Fertigungssystem 1 steuern und/oder warten kann. Bedarfsweise kann auch verschiedene Prozessgrößen über den Monitor 43 parametrisiert werden.

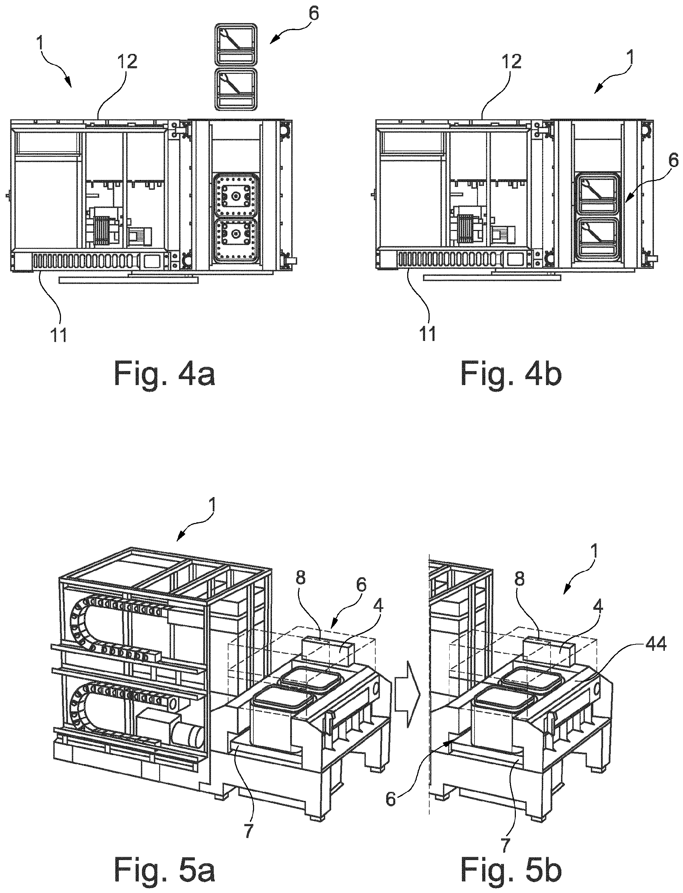

Figur 3 zeigt die Rückseite 12 des additiven Fertigungssystems 1, an der der Beladebereich 3 eingerichtet ist. Der Beladebereich 3 umfasst eine Schnittstelle zum automatisierten oder manuellen Einfügen einer transportablen Behältereinheit 6. Wie in Figuren 4a und 4b gezeigt, kann die Behältereinheit 6 an der Rückseite 12 des Fertigungssystems 1 in den Beladebereich 3 eingefügt werden. Nach einem Abschluss des additiven Fertigens des Werkstücks kann die Behältereinheit 6 über den Beladebereich 3 automatisiert oder manuell aus dem Fertigungssystem 1 entnommen werden.

Somit sind der Bedienerbereich 2 und der Beladebereich 3 räumlich voneinander getrennt angeordnet, sodass ein Zugang des Bedienerbereichs 2 und ein Zugang des Beladebereichs 3 nicht einander durchkreuzen.

Wenn die transportable Behältereinheit 6 in die Baukammer 4 eingefügt ist, wird die Behältereinheit 6 auf eine Hubeinrichtung 7 positioniert werden. Die Hubeinrichtung 7 ist zum Anheben der Behältereinheit 6 gestaltet, um sie an der Baukammer 4, insbesondere am Boden 44 der Baukammer 4 anzudocken (siehe Figuren 5a und 5b).

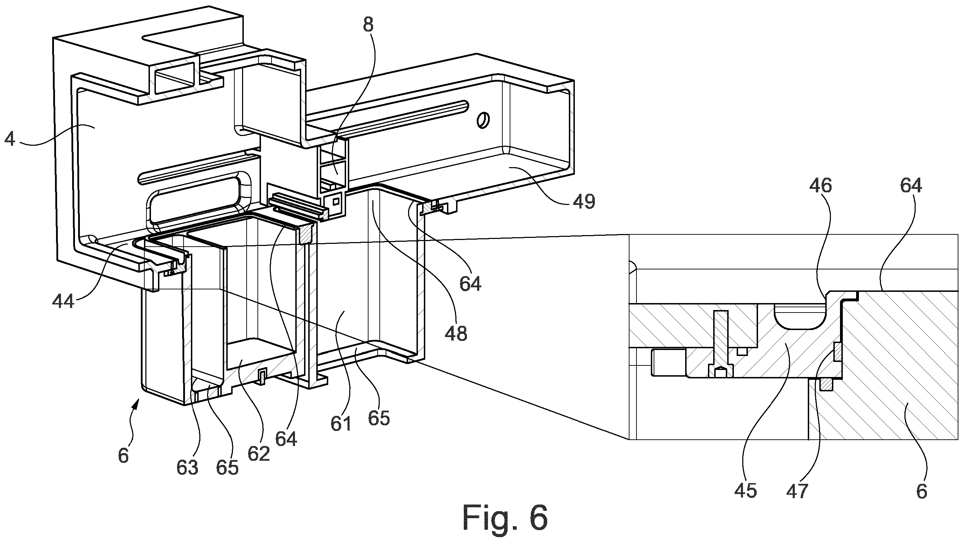

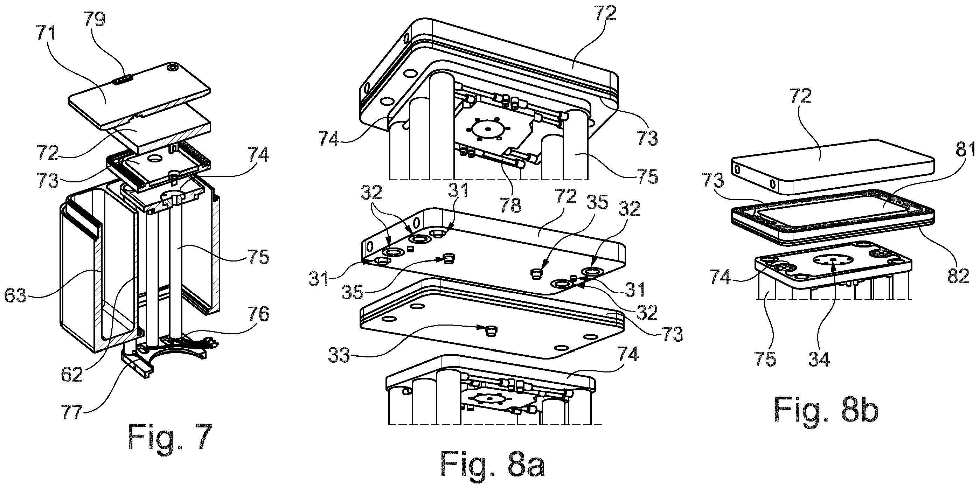

Fig. 6 zeigt die Behältereinheit 6, die mit der Baukammer 4 gekoppelt ist. Die Behältereinheit 6 umfasst einen Pulvervorratsbehälter 61, einen Baubehälter 62 und einen Pulverüberlaufbehälter 63. Der Pulverüberlaufbehälter 63 ist am Baubehälter 62 integriert geformt. Der Pulvervorratsbehälter 61 ist zum Bevorraten eines frisch aufbereiteten Pulvermaterials gestaltet, das bei der additiven Fertigung auf eine Bauplatte 72 des Baubehälters 62 schichtweise aufgetragen wird. Der Baubehälter 62 ist zum Durchführen des additiven Fertigens des Werkstücks gestaltet, indem das auf die Bauplatte 72 schichtweise aufgetragene Pulver durch einen Laserstrahl selektiv geschmolzen wird (siehe Figur 7). Nach dem selektiven Schmelzen des aufgetragenen Pulvers kann das überschüssige Pulver in den Pulverüberlaufbehälter 63 eingesammelt werden.

Das additive Fertigungssystem 1 umfasst weiterhin eine Rakel 8, die zum schichtweise Auftrage des Pulvers vom Pulvervorratsbehälter 61 auf die Bauplatte 72 des Baubehälters 62 und Entfernen des überschüssigen Pulvers vom Baubehälter 62 in Richtung des Pulverüberlaufbehälters 63 gestaltet ist. Daher können der Pulvervorratsbehälter 61, der Baubehälter 62 und der Pulverüberlaufbehälter 63 in dieser Reihenfolge in der Behältereinheit 6 angeordnet sein.

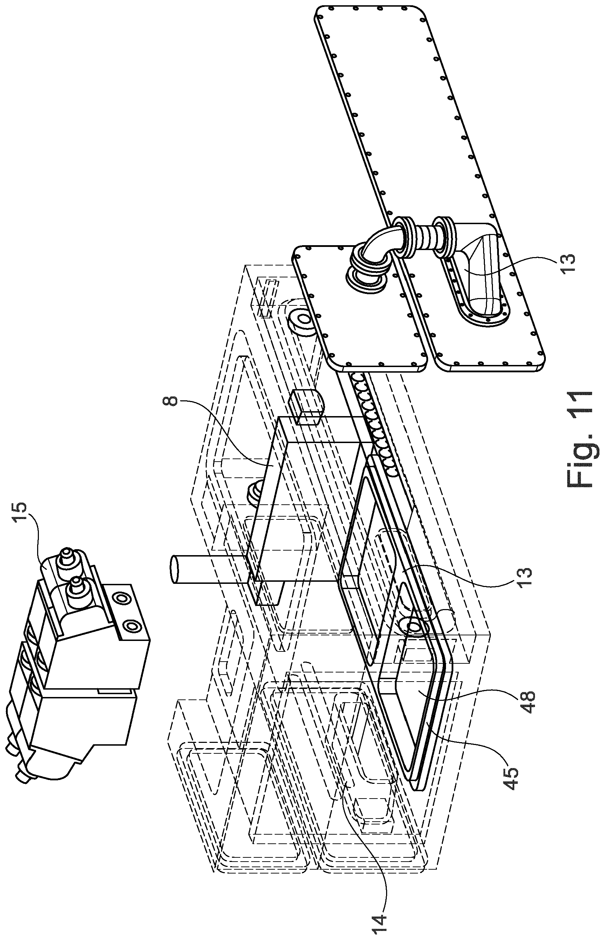

Am Boden 44 der Baukammer 4 ist eine Dichtungsschnittstelle 45 angeordnet, die zur formschlüssigen und gasdichten Verbindung der Behältereinheit 6 mit der Baukammer 4 gestaltet ist. Der Boden 44 der Baukammer 4 umfasst eine Öffnung 48, mit der die Behältereinheit 6 gekoppelt werden kann (siehe auch Figur 11). Die Dichtungsschnittstelle 45 umgibt die Öffnung 48 und den oberen Rand 64 des jeweiligen Behälters der Behältereinheit 6, um eine vakuumfeste Verbindung zwischen der Behältereinheit 6 und der Baukammer 4 herzustellen.

Die Dichtungsschnittstelle 45 weist einen Spalt 46 zum Sammeln eines Pulverrestes auf. Der Spalt 46 ist zwischen dem oberen Rand 64 der Behältereinheit 6 und der Dichtungsschnittstelle 45 angeordnet und zumindest teileweise entlang der Umfangsrichtung des oberen Randes 64 der Behältereinheit 6 erstrecken. Der Spalt 46 erstreckt sich zumindest teilweise vom Boden 44 der Baukammer 4 in Richtung des Behälterbodens 65, sodass ein Ende des Spaltes in der Baukammer 4 freiliegt. Das gegenüberliegende Ende des Spaltes 46 ist mit einer Reinigungsdüse 47 zum Ausblasen des Pulverrests gekoppelt, wobei die Reinigungsdüse 47 zwischen der Dichtungsschnittstelle 45 und der Behältereinheit 6 integriert ist.

Während der additiven Fertigung kann das überschüssige Pulver im Spalt 46 eingesammelt werden und es kann nach Abschluss der additiven Fertigung durch das Gas aus dem Spalt 46 herausgetrieben werden, um eine Pulververschleppung bei einer Behälterentnahme zu vermeiden. Fig. 7 zeigt der Baubehälter 62 an dem der Pulverüberlaufbehälter 63 integriert ist. Der Baubehälter 62 umfasst eine Grundplatte 74 und eine Hebestange 75. Die Hebestange 75 ist zum Bewegen der Grundplatte 74 in vertikaler Richtung innerhalb des Baubehälters 62 gestaltet. Die Grundplatte 74 des Baubehälters 62 kann einen Innenraum des Baubehälters 62 nach außen abdichten. Vorzugsweise kann die Grundplatte 74 des Baubehälters 62 nach jedem Schmelzvorgang oder jeder Belichtung des Laserstrahls mittels der Hebestange 75 schrittweise nach unten herabgesetzt werden, um den nachfolgenden Schmelzvorgang des erneut aufgetragenen Pulvers zu ermöglichen.

Der Baubehälter 62 umfasst ferner eine Heizplatte 73 und eine Bauplatte 72. Die Bauplatte 72 kann das von der Rakel 8 schichtweise aufgetragene Pulver aufzunehmen und das selektive Schmelzen des Pulvers zu ermöglichen. Mit anderen Worten, wird das Pulver auf der Bauplatte 72 des Baubehälters 62 durch Laser selektiv geschmolzen.

Die Heizplatte 73 ist zwischen der Bauplatte 72 und der Grundplatte 74 angeordnet. Die Heizplatte 73 umfasst Heizelemente 81 und eine isolierende Schicht 82 und die Heizplatte 73 ist zum Erhitzen der Bauplatte 72 gestaltet. Mittels der Heizelemente 81 kann die Bauplatte 72 auf mehrere Hundert °C aufgeheizt werden. Durch das Erhitzen der Bauplatte 72 kann eine Spannung am erzeugten Werkstück verringert werden, indem ein Temperaturgradient zwischen den erzeugten Materialschichten des Werkstücks verringert wird. Die Heizwärme soll jedoch nicht in Richtung der Grundplatte 74 geleitet werden, um einen mechanischen Stress durch die Wärme zu vermeiden. Die isolierende Schicht 82 ist daher zur Isolierung in Richtung der Grundplatte 74 unterhalb der Heizelemente 81 angeordnet.

Der Baubehälter 62 umfasst weiterhin einen Deckel 71, der zum Abdichten des Baubehälters 62 gestaltet ist, um einen kontaminationsfreien Transport des Baubehälters 62 zu ermöglichen und einen Inertisierungszustand des Baubehälters 62 aufrechtzuerhalten. Der Deckel 71 weist einen Vorsprung 79 zum Greifen des Deckels 71 auf. Nachdem die Behältereinheit 6 am Boden 44 der Baukammer 4 angedockt ist, kann der Deckel 71 des Baubehälters 62 manuell oder automatisiert entfernt werden. Vorzugsweise kann der Vorsprung 79 des Deckels 71 durch einen Roboterarm oder Greifarm festgehalten werden, um den Deckel 71 an eine Deckellagerstelle 49 zu transportieren (siehe Figur 6). Der Roboterarm kann den Deckel 71 nach dem additiven Fertigen des Werkstücks wieder an die Behältereinheit 6 bringen, um den Baubehälter 62 zu schließen.

Figuren 8a und 8b zeigen, wie die Grundplatte 74, die Heizplatte 73 und die Bauplatte 72 des Baubehälters 62 miteinander verbunden sind. Die Bauplatte 72 und die Heizplatte 73 sind mittels eines Dreipunktauflagesystems miteinander verbunden. Auf einer Unterseite der Bauplatte 72, die der Heizplatte 73 zugewandt ist, sind drei Bolzenelemente 31 angeordnet, die auf die Heizplatte 73 aufliegen. Die Bolzenelemente 31 können von der Unterseite der Bauplatte 72 in Richtung der Heizplatte 73 vorstehen und untereinander jeweils einen möglichst großen Abstand haben. Auf diese Weise kann eine losgelagerte jedoch sichere Dreipunktauflage der Bauplatte 72 realisiert werden. Zusätzlich weist die Unterseite der Bauplatte 72 zumindest zwei Spannstifte 35 auf, welche die Bauplatte 72 während einer Nachbehandlung der Bauplatte 72 fixieren.

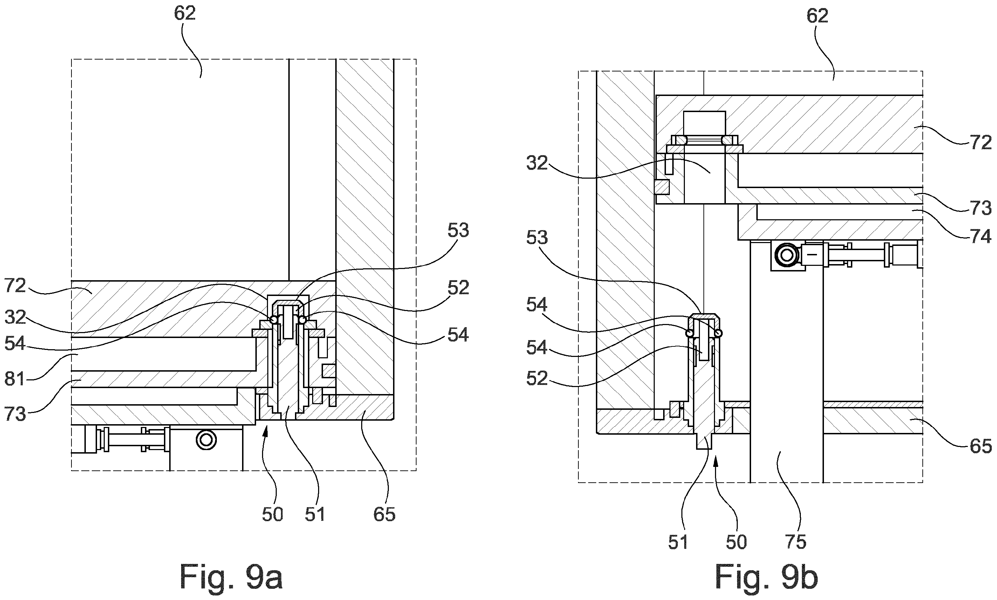

In jeweiliger Ecke der Heizplatte 73 ist ferner ein Durchgangsloch 32 vorgesehen. Durch die Durchgangslöcher 32 können Befestigungsbolzen 51, die vom Rand des Baubehälters 62 kontaktlos durch die Heizplatte 73 bis in die Bauplatte 72 reichen, eingeführt werden. Diese Befestigungsbolzen 51 können dazu dienen, die Bauplatte 72 an einer niedrigsten Stellung innerhalb des Baubehälters 62 zu spannen oder arretieren (siehe Figur 9a und 9b).

Zusätzlich befindet sich an einer Unterseite der Heizplatte 73 ein Bolzenelement 33 für ein NullPunkt-Spannsystem, um eine feste und präzise Verbindung mit der Grundplatte 74 zu realisieren. Um das Bolzenelement 33 der Heizplatte 73 kraftschlüssig und formschlüssig aufnehmen zu können, umfasst die Grundplatte 74 ein Spannelement 34.

Die Grundplatte 74 umfasst mindestens eine Kühlleitung 78, die durch die Hebestange 75 mit einem Zulauf 76 und einem Ablauf 77 eines Kühlmediums gekoppelt ist (siehe Figur 7). Im Inneren der Grundplatte 74 oder an einer Unterseite der Grundplatte 74 kann sich die Kühlleitung 78 befinden, innerhalb derer ein Kühlmedium geführt wird. Folglich kann unterhalb der Heizplatte 73 entstehende Wärme blockiert werden und damit einhergehende thermische Dehnung des Baubehälters 62, insbesondere in vertikaler Richtung kann verhindert werden.

Figuren 9a und 9b zeigen eine Bodenseite 65 des Baubehälters 62. Der Baubehälter 62 umfasst mindestens ein Fixierungselement 50, vorzugsweise zwei oder mehre Fixierungselemente 50. Das Fixierungselement 50 umfasst mindestens eine, vorzugsweise ein Paar Spannkugel 54 und einen Bolzen 51, der mit einer Feder 52 in Richtung des Innenraums des Behälters 62 verbunden ist. Das Fixierungselement 50 umfasst weiterhin ein Gehäuse 53, das den federvorgespannten Bolzen 51 und die Spannkugel 54 aufnimmt. Das Gehäuse 53 des Fixierungselements 50 ist am Behältergehäuse integriert. Der federvorgespannte Bolzen 51 kann sich innerhalb des Gehäuses 53 in vertikaler Richtung bewegen, wobei die Bewegung des Bolzens 51 durch die Feder 52 und die Spannkugel 54, die an einer lateralen Seite des Gehäuses 53 angeordnet ist, eingeschränkt werden kann.

Während einem Behälteraustausch kann die Spannkugel 54 durch den federvorgespannten Bolzen 51 an der Bauplatte 72 eingeklemmt werden. Wenn der Baubehälter 62 aus dem additiven Fertigungssystem 1 entfernt wird, können sich die Grundplatte 74, die Heizplatte 73 und/oder die Bauplatte 72 beim Transportieren, Nacharbeiten und/oder Auffrischen des Behälters 62 bewegen, was zu einer Ablöse der Bauplatte 72 von der Grundplatte 74 führen kann. Um die Verlagerung und/oder Ablöse der einen oder anderen Platte zu vermeiden, kann der Bolzen 51 mit der Feder 52 in eine Fixierungsposition in die Bauplatte 72 über die Durchgangslöcher 32 der Heizplatte 73 gedrückt werden, wobei der Bolzen 51 die Spannkugel 54 nach außen drückt (siehe Figur 9a). Folglich kann eine form- und kraftschlüssige Verbindung zwischen der Bauplatte 72 und dem Behältergehäuse, insbesondere dem Behälterboden 65 des Baubehälters 62 hergestellt werden. Da sich die Heizplatte 73 zwischen der Bauplatte 72 und der Bodenseite 65 des Baubehälters 62 befindet, kann die Heizplatte 73 automatisch mit eingespannt werden.

Während der additiven Fertigung kann sich das Fixierungselement 50 in einer Rückstellposition befinden, sodass der Bolzen 51 nicht mit der Bauplatte 72 in Eingriff steht. Auf diese Weise könnten die Bauplatte 72, Heizplatte 73 und/oder Grundplatte 74 innerhalb des Baubehälters 62 erhöht und/oder abgesenkt werden (siehe Figur 9b).

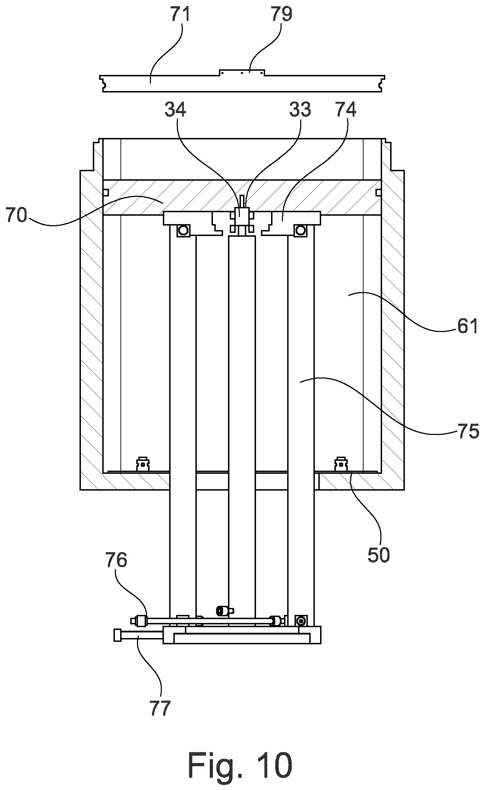

Figur 10 zeigt den Pulvervorratsbehälter 61, der zum Aufbewahren des frisch aufbereiteten Pulvers eingerichtet ist. Der Pulvervorratsbehälter 61 umfasst eine Grundplatte 74 und eine Hebestange 75, welche die Grundplatte 74 innerhalb des Pulvervorratsbehälter 61 erhöht oder absenkt. Der Pulvervorratsbehälter 61 umfasst weiterhin eine Bodenplatte 70, die mittels eines Null-Punkt-Spannsystems, d.h. mit einem Bolzenelement 33 mit der Grundplatte 74 verbunden ist. Somit kann die Bodenplatte 70 mit der Grundplatte 74 in vertikaler Richtung verstellt werden. Vorzugsweise kann die Hebestange 75 des Pulvervorratsbehälters 61 die Grundplatte 74 nach oben anheben, sodass das frisch aufbereitetes Pulver lückenlos auf der Oberfläche des Pulvervorratsbehälters 61 bereitgestellt werden kann.

Am Boden des Pulvervorratsbehälters 61 kann ebenfalls mindestens ein Fixierungselement 50, vorzugsweise zwei oder mehre Fixierungselemente 50 vorgesehen sein, um die Bodenplatte 70 beispielsweise beim Transportieren am Boden des Pulvervorratsbehälters 61 zu befestigen. Der Pulvervorratsbehälter 61 weist ferner einen Deckel 71 auf, der zum Abdichten des Pulvervorratsbehälters 61 gestaltet ist, um einen kontaminationsfreien Transport des Pulvervorratsbehälters 61 zu ermöglichen und einen Inertisierungszustand des Pulvervorratsbehälters 61 aufrechtzuerhalten.

Der Pulvervorratsbehälter 61 kann gleich groß wie oder kleiner als der Baubehälter 62 sein. Der Pulvervorratsbehälter 61 kann mit dem Baubehälter 62 verbunden sein, indem beide Behälter einstückig ausgebildet sind. Alternative können sie unabhängig voneinander hergestellt sein.

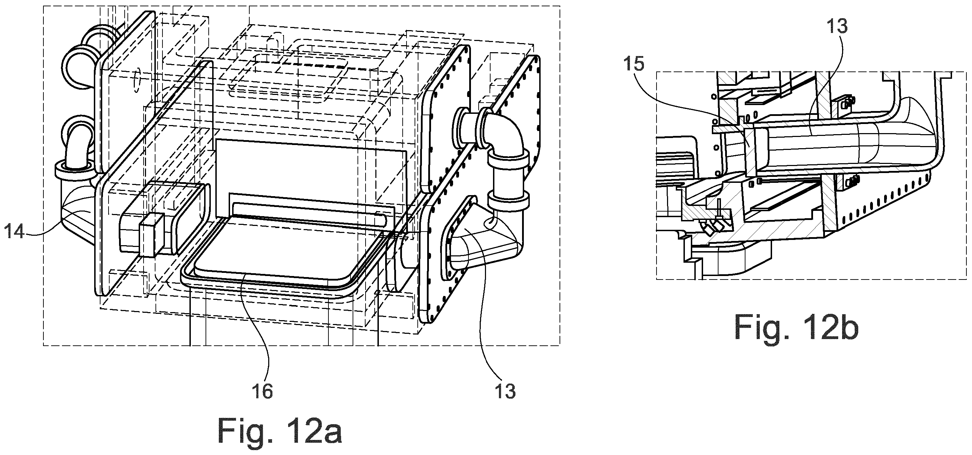

Das additive Fertigungssystem 1 umfasst weiterhin einen Schutzgaseinlass 13, einen Schutzgasauslass 14 und eine optische Bank 15, wie in Figur 11 gezeigt. In Figur 12a sind der Schutzgaseinlass 13 und Schutzgasauslass 14 vergrößert dargestellt. Der Schutzgaseinlass 13 und der Schutzgasauslass 14 sind zur Erzeugung eines Schutzgasstroms 16 relativ zu der Bauplatte 72 angeordnet. Der Schutzgaseinlass 13 und der Schutzgasauslass 14 sind senkrecht zur Bewegungsrichtung der Rakel 8 angeordnet.

Der Schutzgaseinlass 13 ist zur Einspeisung des Schutzgases in die Baukammer 4 eingerichtet. Durch den Schutzgasauslass 14 wird das in der Baukammer 4 freigesetzte Schutzgas eingesaugt werden. Ferner kann der Schutzgasauslass 14 so ausgebildet sein, dass er das in die Baukammer 4 eingelassene Schutzgas vollständig aufnimmt und keine Verjüngung des laminaren und homogenen Schutzgasstroms 16 verursacht.

Durch eine kontinuierliche Zu- und Abfuhr des Schutzgases kann ein laminarer und homogener Schutzgasstrom 16 in der Baukammer 4 erzeugt werden. Dabei kann die Rakel 8 parallel zur Flussrichtung des Schutzgasstroms 16 angeordnet sein, wodurch eine partielle Umleitung und/oder Verwirbelung des Schutzgasstroms 16 vermieden werden können. Das Schutzgas ist zur Verhinderung der Ablagerungen von Schmauch oder Schweißspritzern in der Baukammer 4 gestaltet. Das Schutzgas kann ein Inertgas wie z.B. Argon oder Stickstoff sein.

Wie in Figur 12b gezeigt, weist der Schutzgaseinlass 13 ein poröses Element 15 zum Bereitstellen eines homogenen Schutzgasstroms 16 auf. Das poröse Element 15 kann dazu gestaltet sein, einen Staudruck im Schutzgaseinlass 13 zu erzeugen. Das poröse Element 15 kann als ein Filterelement verstanden werden, das am Schutzgaseinlass 13 angeordnet ist und sich über gesamte Breite und Höhe des Schutzgaseinlasses 13 erstreckt. Das poröse Element 15 kann eine gleichmäßige Porosität über gesamte Fläche des porösen Elements aufweisen. Somit kann der Schutzgasstrom 16 im Bereich des Schutzgaseinlasses 13 keine Geschwindigkeitsgradienten aufweisen.

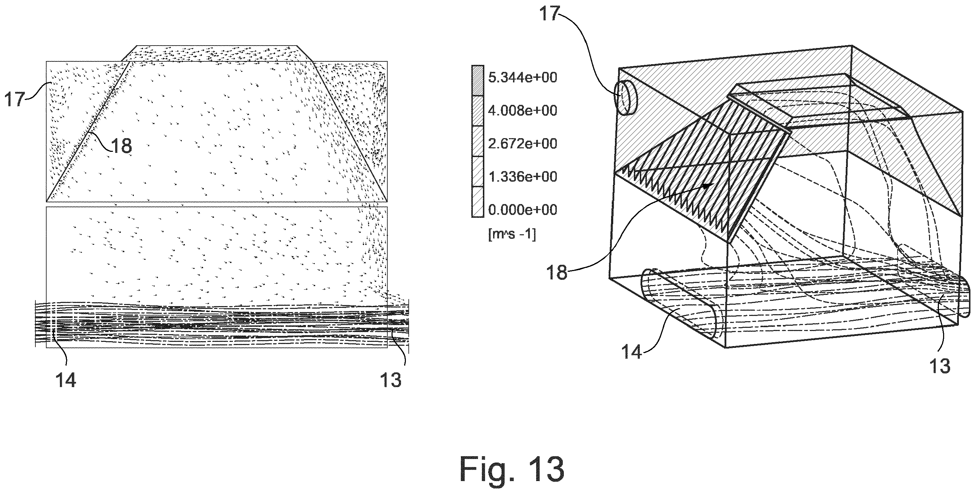

Figur 13 zeigt schematisch einen Schutzgasstrom 16 in der Baukammer 4. Das additive Fertigungssystem 1 kann zusätzlich eine Schutzgaseintrittsöffnung 17 aufweisen, die sich oberhalb der Bauplatte 72 befindet. Durch die Schutzgaseintrittsöffnung 17 kann das Schutzgas zusätzlich oberhalb der Bauplatte 72 in die Baukammer 4 zugeführt werden.

Zwischen der Schutzgaseintrittsöffnung 17 und der Baukammer 4 kann eine gradierte poröse Struktur 18 angeordnet sein. Durch den Einsatz der porösen Struktur 18 kann ein leichter statischer Überdruck zwischen der Schutzgaseintrittsöffnung 17 und der porösen Struktur 18 erzeugt werden, wodurch das Schutzgas homogen durch die poröse Struktur 18 strömen kann. Ferner kann die gradierte poröse Struktur 18 dazu dienen, eine Geschwindigkeit des Schutzgasstroms 16 zu regulieren.

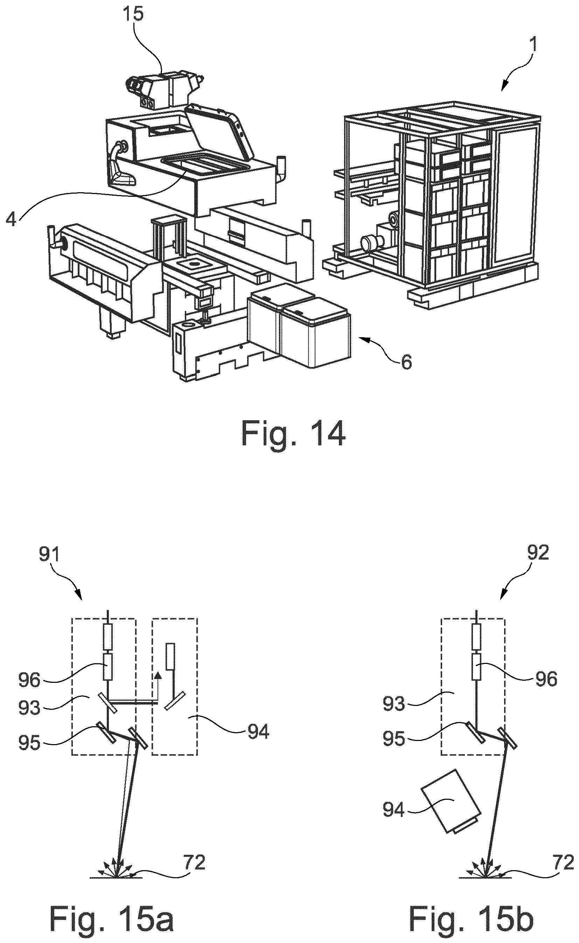

Figur 14 zeigt das additive Fertigungssystem 1 mit der optischen Bank 15. Die optische Bank 15 kann gegenüber der Bauplatte 72, d.h. an einer Oberseite des Fertigungssystems 1 angeordnet sein. Die optische Bank 15 umfasst eine off-axis Überwachungseinrichtung 92 und eine on-axis Überwachungseinrichtung 91. Die off-axis Überwachungseinrichtung 92 ist zur Überwachung einer Wärmeverteilung einer additiv gefertigten Bauteilschicht und einer Auftragsqualität der zuletzt aufgetragenen Pulverschicht gestaltet. Die on-axis Überwachungseinrichtung 91 ist zur Ermittlung einer Temperatur eines Pulverbades auf der aktuell gefertigten Bauteilschicht gestaltet.

Wie in Figur 15a gezeigt, kann die on-axis Überwachungseinrichtung 91 kann einen Quotientenpyrometer, Photodioden und/oder eine Hochgeschwindigkeitskamera umfassen, die zur Ermittlung der Temperatur des Pulverbades gestaltet ist. Auf der Bauplatte 72 innerhalb des Baubehälters 62 kann sich das Pulverbad befinden, sodass das durch das selektive Schmelzen erzeugte Werkstück vom Pulver umgeben ist.

Wie in Figur 15b gezeigt, kann die off-axis Überwachungseinrichtung 92 zwei hochauflösende Multifunktionskameras mit hoher spektraler Bandbreite umfassen, die während der additiven Fertigung unter Verwendung optischer Bandpassfilter thermische Prozessemissionen erfassen können. Eine Datenerfassung der Kamerabilder kann so ausgelegt sein, dass sie während der Belichtung einer Pulverschicht auftretende und erfasste Emissionsdaten der Schmelzbäder innerhalb eines Bildes integriert. Das Resultat dieser Aufnahme kann einer Heat-Map der aktuell aufgebauten Schicht entsprechen. Aus dieser Heat-Map kann eine Möglichkeit für eine dynamische Anpassung von Belichtungsreihenfolgen zu scannender Bereiche innerhalb einer Schicht, der Anpassung der Laserleistungen oder der Scangeschwindigkeit innerhalb bestimmter Scanbereiche bestehen.

Die on-axis Überwachungseinrichtung 91 und die off-axis Überwachungseinrichtung 92 umfassen jeweils eine Sensoreinheit 94 und eine optische Einheit 93 mit einem Scankopf 95 und einem Kollimator 96

Ergänzend sei darauf hingewiesen, dass "umfassend" und "aufweisend" keine anderen Elemente oder Schritte ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein additives Fertigungssystem (1), umfassend
- einen Bedienerbereich (2),
- einen Beladebereich (3),
- eine Baukammer (4), und
- eine transportable Behältereinheit (6),
wobei der Bedienerbereich (2) zur Steuerung des Fertigungssystems (1) gestaltet ist,
wobei der Beladebereich (3) zum Beladen des Fertigungssystems (1) mit Pulver gestaltet ist und eine Schnittstelle zum automatisierten Einfügen der transportablen Behältereinheit (6) ins Fertigungssystem (1) umfasst,
wobei der Bedienerbereich (2) von einer ersten Seite (11) des Fertigungssystems (1) zugänglich ist, der Beladebereich (3) von einer zweiten Seite (12) des Fertigungssystems (1) zugänglich ist und sich die erste Seite (11) von der zweiten Seite (12) unterscheidet,
wobei der Bedienerbereich (2) einen öffnenbaren Zugang (41) zur Baukammer (4) und zumindest eine Steuerungseinrichtung umfasst,
wobei die transportable Behältereinheit (6) von außen in den Beladebereich (3) einfügbar ist und einen Pulvervorratsbehälter (61) und einen Baubehälter (62) umfasst,
wobei der Pulvervorratsbehälter (61) zum Bevorraten von Pulver gestaltet ist und der Baubehälter (62) zum additiven Fertigen eines Werkstücks gestaltet ist,
wobei die erste Seite (11) des Fertigungssystems (1) der zweiten Seite (12) des Fertigungssystems (1) gegenüberliegt,
wobei der öffnenbare Zugang (41) gegenüber einer Einführrichtung der transportablen Behältereinheit (6) in den Beladebereich angeordnet ist,
wobei der Baubehälter (62) eine Bauplatte (72) aufweist,
wobei die Baukammer (4) zum Auftragen des Pulvers auf die Bauplatte (72) mit der transportablen Behältereinheit (6) koppelbar ist, und
wobei der Baubehälter (62) mindestens ein Fixierungselement (50) mit einem federvorgespannten Bolzen und einer Spannkugel umfassen, und wobei während einem Behälteraustausch die Spannkugel durch den federvorgespannten Bolzen an der Bauplatte (72) klemmbar ist.

2. Additives Fertigungssystem (1) nach Anspruch 1, wobei die transportable Behältereinheit (6) weiterhin einen Pulverüberlaufbehälter (63) umfasst.

3. Additives Fertigungssystem (1) nach einem der vorherigen Ansprüche, wobei der Pulvervorratsbehälter (61) und der Baubehälter (62) jeweils eine Grundplatte (74) und eine Hebestange (75) umfassen, wobei die Hebestange (75) zum Anheben der Grundplatte (74) innerhalb des jeweiligen Behälters gestaltet ist.

4. Additives Fertigungssystem (1) nach dem vorherigen Anspruch, wobei der Baubehälter (62) eine Heizplatte (73) aufweist, wobei die Heizplatte (73) zwischen der Bauplatte (72) und der Grundplatte (74) angeordnet ist, und wobei die Heizplatte (73) zum Erhitzen der Bauplatte (72) gestaltet ist.

5. Additives Fertigungssystem (1) nach dem vorherigen Anspruch, wobei die Heizplatte (73) Heizelemente und eine isolierende Schicht umfasst, wobei die isolierende Schicht zur Isolierung in Richtung der Grundplatte (74) unterhalb der Heizelemente angeordnet ist.

6. Additives Fertigungssystem (1) nach einem der Ansprüche 3 bis 5, wobei die Grundplatte (74) mindestens eine Kühlleitung umfasst, und wobei die Kühlleitung durch die Hebestange (75) mit einem Zulauf und einem Ablauf eines Kühlmediums gekoppelt ist.

7. Additives Fertigungssystem (1) nach einem der vorherigen Ansprüche, ferner umfassend eine Hubeinrichtung (7), wobei die Hubeinrichtung (7) zum Anheben der transportablen Behältereinheit (6) an einen Boden (44) der Baukammer (4) gestaltet ist.

8. Additives Fertigungssystem (1) nach dem vorherigen Anspruch, wobei der Boden (44) der Baukammer (4) eine Dichtungsschnittstelle (45) aufweist, und wobei die Dichtungsschnittstelle (45) zur formschlüssigen und gasdichten Verbindung der transportablen Behältereinheit (6) mit der Baukammer (4) gestaltet ist.

9. Additives Fertigungssystem (1) nach dem vorherigen Anspruch, wobei die Dichtungsschnittstelle (45) einen Spalt (46) zum Sammeln eines Pulverrestes aufweist, und wobei der Spalt (46) mit einer Reinigungsdüse (47) zum Ausblasen des Pulverrests gekoppelt ist.

10. Additives Fertigungssystem (1) nach einem der Ansprüche 4 bis 9, ferner umfassend einen Schutzgaseinlass (13) und einen Schutzgasauslass (14), wobei der Schutzgaseinlass (13) und der Schutzgasauslass (14) zur Erzeugung eines Schutzgasstroms (16) relativ zu der Bauplatte (72) angeordnet sind.

11. Additives Fertigungssystem (1) nach einem der vorherigen Ansprüche, ferner umfassend eine optische Bank (15), wobei die optische Bank (15) eine off-axis Überwachungseinrichtung (92) und eine on-axis Überwachungseinrichtung (91) umfasst, und wobei die off-axis Überwachungseinrichtung (92) zur Überwachung einer Wärmeverteilung einer additiv gefertigten Bauteilschicht des Werkstücks und einer Auftragsqualität einer zuletzt aufgetragenen Pulverschicht gestaltet ist, wobei die on-axis Überwachungseinrichtung (91) zur Ermittlung einer Temperatur eines Pulverbades auf der aktuell gefertigten Bauteilschicht gestaltet ist.

12. Additives Fertigungssystem (1) nach einem der vorherigen Ansprüche, wobei der Pulvervorratsbehälter (61) und der Baubehälter (62) jeweils einen Deckel (71) umfassen, wobei der Deckel (71) zum Abdichten des jeweiligen Behälters gestaltet ist, und wobei der Deckel (71) ferner einen Vorsprung (79) zum Greifen des Deckels (71) aufweist.

13. Additives Fertigungssystem (1) nach einem der vorherigen Ansprüche, wobei der Bedienerbereich (2) einen Monitor (43) zur Kontrolle und/oder Steuerung von Daten und/oder Funktionen des Fertigungssystems (1) aufweist.

14. Ein additives Fertigungsverfahren, umfassend die folgenden Schritte:
- Bereitstellen eines additiven Fertigungssystems (1) mit einem Bedienerbereich, einem Beladebereich (3) und einer transportablen Behältereinheit (6), wobei der Bedienerbereich (2) zur Steuerung des Fertigungssystems (1) gestaltet ist, wobei der Beladebereich (3) zum Beladen des Fertigungssystems (1) mit Pulver gestaltet ist und eine Schnittstelle zum automatisierten Einfügen der transportablen Behältereinheit (6) ins Fertigungssystem (1) umfasst, wobei der Bedienerbereich (2) einen öffnenbaren Zugang (41) zur Baukammer (4) und zumindest eine Steuerungseinrichtung umfasst, wobei der Bedienerbereich (2) von einer ersten Seite (11) des Fertigungssystems (1) zugänglich ist, der Beladebereich (3) von einer zweiten Seite (12) des Fertigungssystems (1) zugänglich ist und sich die erste Seite (11) von der zweiten Seite (12) unterscheidet,
wobei die erste Seite (11) des Fertigungssystems (1) der zweiten Seite (12) des Fertigungssystems (1) gegenüberliegt, und
- Einfügen der transportablen Behältereinheit (6) von außen in den Beladebereich (3), wobei die transportable Behältereinheit (6) einen Pulvervorratsbehälter (61) und einen Baubehälter (62) umfasst, wobei der Pulvervorratsbehälter (61) zum Bevorraten von Pulver gestaltet ist, und der Baubehälter (62) zum additiven Fertigen eines Werkstücks gestaltet ist, wobei der öffnenbare Zugang (41) gegenüber einer Einführrichtung der transportablen Behältereinheit (6) in den Beladebereich angeordnet ist, wobei der Baubehälter (62) eine Bauplatte (72) aufweist, wobei die Baukammer (4) zum Auftragen des Pulvers auf die Bauplatte (72) mit der transportablen Behältereinheit (6) koppelbar ist, wobei der Baubehälter (62) mindestens ein Fixierungselement (50) mit einem federvorgespannten Bolzen und einer Spannkugel umfassen, und wobei während einem Behälteraustausch die Spannkugel durch den federvorgespannten Bolzen an der Bauplatte (72) klemmbar ist.

15. Additives Fertigungsverfahren nach dem vorherigen Anspruch, weiterhin umfassend ein Anheben der transportablen Behältereinheit (6) mittels einer Hubeinrichtung (7) an einem Boden einer Baukammer (4) nach dem Einfügen der transportablen Behältereinheit (6) in den Beladebereich.

16. Additives Fertigungsverfahren nach dem vorherigen Anspruch, weiterhin umfassend ein erstes Einlassen eines Schutzgases in die Baukammer (4) zur Inertisierung der Baukammer (4) nach dem Anheben der transportablen Behältereinheit (6).

17. Additives Fertigungsverfahren nach dem vorherigen Anspruch, weiterhin umfassend ein Entfernen eines Deckels (71) jeweils vom Pulvervorratsbehälter (61) und vom Baubehälter (62) nach dem ersten Einlassen eines Schutzgases.

18. Additives Fertigungsverfahren nach dem vorherigen Anspruch, weiterhin umfassend ein Vakuumieren der Baukammer (4) und anschließend ein zweites Einlassen eines Schutzgases in die Baukammer (4) zur Inertisierung der geöffneten Behälter nach dem Entfernen des Deckels.

## Claims

1. An additive manufacturing system (1), comprising
- an operator area (2),
- a loading area (3),
- a build chamber (4), and
- a transportable container unit (6),
wherein the operator area (2) is configured to control the manufacturing system (1),
wherein the loading area (3) is configured to load the manufacturing system (1) with powder and includes an interface for the automated insertion of the transportable container unit (6) into the manufacturing system (1),
wherein the operator area (2) is accessible from a first side (11) of the manufacturing system (1), the loading area (3) is accessible from a second side (12) of the manufacturing system (1), and the first side (11) is different from the second side (12),
wherein the operator area (2) includes an openable access (41) to the build chamber (4) and at least one control device,
wherein the transportable container unit (6) is insertable from outside into the loading area (3) and includes a powder reservoir container (61) and a build container (62),
wherein the powder reservoir container (61) is configured to store powder, and
wherein the build container (62) is configured for the additive manufacturing of a workpiece, wherein the first side (11) of the manufacturing system (1) is opposite the second side (12) of the manufacturing system (1),
wherein the openable access (41) is arranged opposite an insertion direction of the transportable container unit (6) into the loading area (3),
wherein the build container (62) includes a build plate (72),
wherein the build chamber (4) is couplable to apply powder to the build plate (72) with the transportable container unit (6), and
wherein the build container (62) comprises at least one fastening element (50) with a spring-preloaded bolt and a tension ball, and wherein during a container exchange, the tension ball is clampable to the build plate (72) by the spring-preloaded bolt.

2. The additive manufacturing system (1) according to claim 1, wherein the transportable container unit (6) further comprises a powder overflow container (63).

3. The additive manufacturing system (1) according to any one of the preceding claims, wherein the powder reservoir container (61) and the build container (62) each comprise a base plate (74) and a lifting rod (75), wherein the lifting rod (75) is configured to lift the base plate (74) within the respective container.

4. The additive manufacturing system (1) according to the preceding claim, wherein the build container (62) includes a heating plate (73), wherein the heating plate (73) is arranged between the build plate (72) and the base plate (74), and wherein the heating plate (73) is configured to heat the build plate (72).

5. The additive manufacturing system (1) according to the preceding claim, wherein the heating plate (73) comprises heating elements and an insulating layer, wherein the insulating layer is arranged for insulation in the direction of the base plate (74) beneath the heating elements.

6. The additive manufacturing system (1) according to any one of claims 3 to 5, wherein the base plate (74) comprises at least one cooling channel, and wherein the cooling channel is coupled to a supply and a return of a cooling medium via the lifting rod (75).

7. The additive manufacturing system (1) according to any one of the preceding claims, further comprising a lifting device (7), wherein the lifting device (7) is configured to lift the transportable container unit (6) to a base (44) of the build chamber (4).

8. The additive manufacturing system (1) according to the preceding claim, wherein the base (44) of the build chamber (4) includes a sealing interface (45), and wherein the sealing interface (45) is configured for a form-fitting and gas-tight connection of the transportable container unit (6) with the build chamber (4).

9. The additive manufacturing system (1) according to the preceding claim, wherein the sealing interface (45) includes a gap (46) for collecting residual powder, and wherein the gap (46) is coupled to a cleaning nozzle (47) for blowing out the residual powder.

10. The additive manufacturing system (1) according to any one of claims 4 to 9, further comprising a protective gas inlet (13) and a protective gas outlet (14), wherein the protective gas inlet (13) and the protective gas outlet (14) are arranged to generate a protective gas flow (16) relative to the build plate (72).

11. The additive manufacturing system (1) according to any one of the preceding claims, further comprising an optical bench (15), wherein the optical bench (15) comprises an off-axis monitoring device (92) and an on-axis monitoring device (91), and wherein the off-axis monitoring device (92) is configured to monitor a heat distribution of an additively manufactured component layer of the workpiece and a coating quality of a recently applied powder layer, and wherein the on-axis monitoring device (91) is configured to determine a temperature of a powder bed on the currently manufactured component layer.

12. The additive manufacturing system (1) according to any one of the preceding claims, wherein the powder reservoir container (61) and the build container (62) each comprise a lid (71), wherein the lid (71) is configured to seal the respective container, and wherein the lid (71) further includes a protrusion (79) for gripping the lid (71).

13. The additive manufacturing system (1) according to any one of the preceding claims, wherein the operator area (2) includes a monitor (43) for controlling and/or managing data and/or functions of the manufacturing system (1).

14. An additive manufacturing method, comprising the following steps:
- Providing an additive manufacturing system (1) with an operator area, a loading area (3), and a transportable container unit (6), wherein the operator area (2) is configured to control the manufacturing system (1), wherein the loading area (3) is configured to load the manufacturing system (1) with powder and includes an interface for the automated insertion of the transportable container unit (6) into the manufacturing system (1), wherein the operator area (2) includes an openable access (41) to the build chamber (4) and at least one control device, wherein the operator area (2) is accessible from a first side (11) of the manufacturing system (1), the loading area (3) is accessible from a second side (12) of the manufacturing system (1), and the first side (11) is different from the second side (12),
- wherein the first side (11) of the manufacturing system (1) is opposite the second side (12) of the manufacturing system (1), and
- inserting the transportable container unit (6) from outside into the loading area (3), wherein the transportable container unit (6) comprises a powder reservoir container (61) and a build container (62), wherein the powder reservoir container (61) is configured to store powder, and the build container (62) is configured for the additive manufacturing of a workpiece, wherein the openable access (41) is arranged opposite an insertion direction of the transportable container unit (6) into the loading area (3), wherein the build container (62) includes a build plate (72), wherein the build chamber (4) is couplable to apply powder to the build plate (72) with the transportable container unit (6), wherein the build container (62) comprises at least one fastening element (50) with a spring-preloaded bolt and a tension ball, and wherein during a container exchange, the tension ball is clampable to the build plate (72) by the spring-preloaded bolt.

15. The additive manufacturing method according to the preceding claim, further comprising lifting the transportable container unit (6) using a lifting device (7) to a base of a build chamber (4) after inserting the transportable container unit (6) into the loading area.

16. The additive manufacturing method according to the preceding claim, further comprising initially introducing a protective gas into the build chamber (4) for inertizing the build chamber (4) after lifting the transportable container unit (6).

17. The additive manufacturing method according to the preceding claim, further comprising removing a lid (71) from both the powder reservoir container (61) and the build container (62) after the initial introduction of a protective gas.

18. The additive manufacturing method according to the preceding claim, further comprising evacuating the build chamber (4) and subsequently introducing a second protective gas into the build chamber (4) for inertizing the opened containers after removing the lid.

## Revendications

1. Système de fabrication additive (1) comprenant :
une zone d'opérateur (2),
une zone de chargement (3),
une chambre de construction (4) et
une unité récipient transportable (6),
dans lequel la zone d'opérateur (2) est conçue pour commander le système de fabrication (1),
dans lequel la zone de chargement (3) est conçue pour charger de la poudre dans le système de fabrication (1) et comprend une interface pour insérer de manière automatisée l'unité récipient transportable (6) dans le système de fabrication (1),
dans lequel la zone d'opérateur (2) est accessible depuis un premier côté (11) du système de fabrication (1), la zone de chargement (3) est accessible depuis un deuxième côté (12) du système de fabrication (1) et le premier côté (11) est différent du deuxième côté (12),
dans lequel la zone d'opérateur (2) comprend un accès ouvrable (41) à la chambre de construction (4) et au moins un dispositif de commande,
dans lequel l'unité récipient transportable (6) peut être insérée dans la zone de chargement (3) depuis l'extérieur et comprend un récipient de stockage de poudre (61) et un récipient de construction (62),
dans lequel le récipient de stockage de poudre (61) est conçu pour stocker de la poudre et le récipient de construction (62) est conçu pour la fabrication additive d'une pièce,
dans lequel le premier côté (11) du système de fabrication (1) est opposé au deuxième côté (12) du système de fabrication (1),
dans lequel l'accès ouvrable (41) est disposé à l'opposé **d'une** direction d'introduction de l'unité récipient transportable (6) dans la zone de chargement,
dans lequel le récipient de construction (62) présente une plaque de construction (72),
dans lequel la chambre de construction (4) peut être couplée à l'unité récipient transportable (6) pour l'application de la poudre sur la plaque de construction (72), et
dans lequel le récipient de construction (62) comprend au moins un élément de fixation (50) avec un boulon précontraint par ressort et une bille de serrage, et dans lequel, pendant un remplacement de récipient, la bille de serrage peut être serrée sur la plaque de construction (72) par le boulon précontraint par ressort.

2. Système de fabrication additive (1) selon la revendication 1, dans lequel l'unité récipient transportable (6) comprend en outre un récipient de trop-plein de poudre (63).

3. Système de fabrication additive (1) selon l'une des revendications précédentes, dans lequel le récipient de stockage de poudre (61) et le récipient de construction (62) comprennent chacun une plaque de base (74) et une barre de levage (75), la barre de levage (75) étant conçue pour lever la plaque de base (74) à l'intérieur du récipient respectif.

4. Système de fabrication additive (1) selon la revendication précédente, dans lequel le récipient de construction (62) présente une plaque chauffante (73), dans lequel la plaque chauffante (73) est disposée entre la plaque de construction (72) et la plaque de base (74), et dans lequel la plaque chauffante (73) est conçue pour chauffer la plaque de construction (72).

5. Système de fabrication additive (1) selon la revendication précédente, dans lequel la plaque chauffante (73) comprend des éléments chauffants et une couche isolante, dans lequel la couche isolante est disposée en dessous des éléments chauffants pour l'isolation en direction de la plaque de base (74).

6. Système de fabrication additive (1) selon l'une des revendications 3 à 5, dans lequel la plaque de base (74) comprend au moins une conduite de refroidissement, et dans lequel la conduite de refroidissement est couplée à une arrivée et à un départ d'un fluide de refroidissement par la barre de levage (75).

7. Système de fabrication additive (1) selon l'une des revendications précédentes, comprenant en outre un dispositif de levage (7), le dispositif de levage (7) étant conçu pour lever l'unité récipient transportable (6) sur un fond (44) de la chambre de construction (4).

8. Système de fabrication additive (1) selon la revendication précédente, dans lequel le fond (44) de la chambre de construction (4) présente une interface d'étanchéité (45), et dans lequel l'interface d'étanchéité (45) est conçue pour relier l'unité récipient transportable (6) à la chambre de construction (4) par complémentarité de forme et de manière étanche aux gaz.

9. Système de fabrication additive (1) selon la revendication précédente, dans lequel l'interface d'étanchéité (45) comprend une fente (46) pour collecter un résidu de poudre, et dans lequel la fente (46) est couplée à une buse de nettoyage (47) pour souffler le résidu de poudre.

10. Système de fabrication additive (1) selon l'une des revendications 4 à 9, comprenant en outre une entrée de gaz de protection (13) et une sortie de gaz de protection (14), dans lequel l'entrée de gaz de protection (13) et la sortie de gaz de protection (14) sont disposées de manière à générer un flux de gaz de protection (16) par rapport à la plaque de construction (72).

11. Système de fabrication additive (1) selon l'une des revendications précédentes, comprenant en outre un banc optique (15), dans lequel le banc optique (15) comprend un dispositif de surveillance hors de l'axe (92) et un dispositif de surveillance dans l'axe (91), et dans lequel le dispositif de surveillance hors de l'axe (92) est conçu pour surveiller une distribution de chaleur d'une couche de composant fabriquée de manière additive de la pièce et une qualité d'application d'une couche de poudre appliquée en dernier, dans lequel le dispositif de surveillance dans l'axe (91) est conçu pour déterminer une température d'un bain de poudre sur la couche de composant actuellement fabriquée.

12. Système de fabrication additive (1) selon l'une des revendications précédentes, dans lequel le récipient de stockage de poudre (61) et le récipient de construction (62) comprennent chacun un couvercle (71), dans lequel le couvercle (71) est conçu pour fermer le récipient respectif de manière étanche, et dans lequel le couvercle (71) présente en outre une saillie (79) pour saisir le couvercle (71).

13. Système de fabrication additive (1) selon l'une des revendications précédentes, dans lequel la zone d'opérateur (2) présente un écran (43) pour contrôler et/ou commander des données et/ou des fonctions du système de fabrication (1).

14. Procédé de fabrication additive comprenant les étapes suivantes :
- fourniture d'un système de fabrication additive (1) comprenant une zone d'opérateur, une zone de chargement (3) et une unité récipient transportable (6), dans lequel la zone d'opérateur (2) est conçue pour commander le système de fabrication (1), dans lequel la zone de chargement (3) est conçue pour charger de la poudre dans le système de fabrication (1) et comprend une interface pour insérer de manière automatisée l'unité récipient transportable (6) dans le système de fabrication (1), dans lequel la zone d'opérateur (2) comprend un accès ouvrable (41) à la chambre de construction (4) et au moins un dispositif de commande, dans lequel la zone d'opérateur (2) est accessible depuis un premier côté (11) du système de fabrication (1), la zone de chargement (3) est accessible depuis un deuxième côté (12) du système de fabrication (1) et le premier côté (11) est différent du deuxième côté (12),
dans lequel le premier côté (11) du système de fabrication (1) est opposé au deuxième côté (12) du système de fabrication (1), et
- insertion de l'unité récipient transportable (6) dans la zone de chargement (3) depuis l'extérieur, dans lequel l'unité récipient transportable (6) comprend un récipient de stockage de poudre (61) et un récipient de construction (62), dans lequel le récipient de stockage de poudre (61) est conçu pour stocker de la poudre et le récipient de construction (62) est conçu pour la fabrication additive d'une pièce, dans lequel l'accès ouvrable (41) est disposé à l'opposé **d'une** direction d'introduction de l'unité récipient transportable (6) dans la zone de chargement, dans lequel le récipient de construction (62) présente une plaque de construction (72), dans lequel la chambre de construction (4) peut être couplée à l'unité de récipient transportable (6) pour l'application de la poudre sur la plaque de construction (72), dans lequel le récipient de construction (62) comprend au moins un élément de fixation (50) avec un boulon précontraint par ressort et une bille de serrage, et dans lequel, pendant un remplacement de récipient, la bille de serrage peut être serrée sur la plaque de construction (72) par le boulon précontraint par ressort.

15. Procédé de fabrication additive selon la revendication précédente, comprenant en outre un levage de l'unité récipient transportable (6) au moyen d'un dispositif de levage (7) sur un fond d'une chambre de construction (4) après l'insertion de l'unité récipient transportable (6) dans la zone de chargement.

16. Procédé de fabrication additive selon la revendication précédente, comprenant en outre une première entrée d'un gaz de protection dans la chambre de construction (4) pour inerter la chambre de construction (4) après le levage de l'unité récipient transportable (6).

17. Procédé de fabrication additive selon la revendication précédente, comprenant en outre le retrait d'un couvercle (71) de chacun du récipient de stockage de poudre (61) et du récipient de construction (62) après la première entrée d'un gaz de protection.

18. Procédé de fabrication additive selon la revendication précédente, comprenant en outre une mise sous vide de la chambre de construction (4) et ensuite une deuxième entrée **d'un** gaz de protection dans la chambre de construction (4) pour inerter les récipients ouverts après le retrait du couvercle.
